(19) Europäisches Patentamt / European Patent Office / Office européen des brevets

(11) **EP 3 783 868 B1**

(12) **EUROPEAN PATENT SPECIFICATION**

(45) Date of publication and mention
of the grant of the patent:
**24.08.2022 Bulletin 2022/34**

(51) International Patent Classification (IPC):
**H04L 9/40** *(2022.01)*    **H04L 65/40** *(2022.01)*
**H04L 9/32** *(2006.01)*    **G06Q 20/38** *(2012.01)*
**G06Q 20/10** *(2012.01)*

(21) Application number: **20758912.8**

(22) Date of filing: **12.02.2020**

(52) Cooperative Patent Classification (CPC):
**H04L 9/3239; G06Q 20/10; H04L 9/3263;
H04L 9/50; H04L 63/1441; H04L 65/40**

(86) International application number:
**PCT/CN2020/074848**

(87) International publication number:
**WO 2020/168954 (27.08.2020 Gazette 2020/35)**

(54) **METHOD, APPARATUS, AND DEVICE FOR ESTABLISHING CONNECTION BETWEEN BLOCKCHAIN NODES**

VERFAHREN, GERÄT UND VORRICHTUNG ZUR HERSTELLUNG EINER VERBINDUNG ZWISCHEN BLOCKCHAIN-KNOTEN

PROCÉDÉ, APPAREIL ET DISPOSITIF D'ÉTABLISSEMENT D'UNE CONNEXION ENTRE DES NOEUDS D'UNE CHAÎNE DE BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2019 CN 201910126002**

(43) Date of publication of application:
**24.02.2021 Bulletin 2021/08**

(73) Proprietor: **HUAWEI TECHNOLOGIES CO., LTD.
Shenzhen, Guangdong 518129 (CN)**

(72) Inventors:
• **YANG, Fei**
  **Shenzhen, Guangdong 518129 (CN)**
• **YANG, Xue**
  **Shenzhen, Guangdong 518129 (CN)**
• **LIU, Bingyang**
  **Shenzhen, Guangdong 518129 (CN)**
• **WEI, Xinpeng**
  **Shenzhen, Guangdong 518129 (CN)**
• **REN, Shoushou**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A2-2005/034569    CN-A- 101 102 325
CN-A- 102 347 903    CN-A- 104 811 380
CN-A- 108 989 220**

• **MARIA APOSTOLAKI ET AL: "SABRE: Protecting Bitcoin against Routing Attacks", ARXIV.ORG, CORNELL UNIVERSITY LIBRARY, 201 OLIN LIBRARY CORNELL UNIVERSITY ITHACA, NY 14853, 19 August 2018 (2018-08-19), XP080908992,**
• **MEGUMI SHIBUYA ET AL: "ISP-friendly peer selection mechanism with ALTO-like server", NETWORK OPERATIONS AND MANAGEMENT SYMPOSIUM (APNOMS), 2011 13TH ASIA-PACIFIC, IEEE, 21 September 2011 (2011-09-21), pages 1-8, XP032021516, DOI: 10.1109/APNOMS.2011.6077007 ISBN: 978-1-4577-1668-3**

EP 3 783 868 B1

- **APOSTOLAKI MARIA ET AL: "Hijacking Bitcoin: Routing Attacks on Cryptocurrencies", 2017 IEEE SYMPOSIUM ON SECURITY AND PRIVACY (SP), IEEE, 22 May 2017 (2017-05-22), pages 375-392, XP033108064, DOI: 10.1109/SP.2017.29 [retrieved on 2017-06-23]**

## Description

## TECHNICAL FIELD

This application relates to the field of communications technologies, and in particular, to a method and an apparatus for establishing a blockchain node connection, and a device.

## BACKGROUND

At present, a blockchain system may be created by using a plurality of technologies (such as an Ethereum technology).

A blockchain system includes a plurality of blockchain nodes (referred to as nodes for short below). A node may include a node table (NodeTable), and the node may add, to the node table, a node that has been in contact with the node recently and that is reachable for the node. After the node is started, the node may establish a connection to the node in the node table. However, in an actual application process, a plurality of attack nodes may repeatedly send a connection request to a node, to make the node add the attack nodes to a node table, so that after the node is started, all outgoing connections of the node are connections to the attack nodes, and consequently the node is surrounded by the attack nodes. In other words, nodes to which the node establishes connections are all attack nodes, and consequently the node is controlled by the attack nodes. This results in relatively low communication security.

Apostolaki, Maria et al: "SABRE: Protecting Bitcoin against Routing Attacks", Network and Distributed Systems Security (NDSS) Symposium 2019, 24-27 February 2019, San Diego, CA, USA, assesses a Bitcoin relay network which relays blocks worldwide through a set of connections that are resilient to routing attacks as secure and scalable. Megumi, S et al: "ISP-friendly peer selection mechanism with alto-like server", 13th Asia-Pacific Network Operations and Management Symposium, IEEE, Sep 21-23, 2011, Taipei, Taiwan, page 1-8, describes the mechanism of an ISP-Friendly with ALTO-like server called "n-Tracker", which provides a ranking service that applies the ISP's own policy flexibly.

## SUMMARY

The present invention is defined by the independent claims. Preferred embodiments of the present invention are specified in the dependent claims. This application provides a method and an apparatus for establishing a blockchain node connection, and a device, to improve blockchain communication security.

According to a first aspect, an embodiment of this application provides a method for establishing a blockchain node connection. The method is applied to a blockchain system, and the method may include: A first node obtains address information of a second node from a first router, and establishes a connection to the second node based on the address information of the second node. The first router and the first node are located in a first autonomous system, the second node is located in a second autonomous system, and the first autonomous system and the second autonomous system are neighboring autonomous systems. The first node and the second node are blockchain nodes.

In the foregoing process, after the first node in the first autonomous system is started, the first node first obtains the address information of the second node in the second autonomous system (where the first autonomous system and the second autonomous system are neighbors), and establishes the connection to the second node based on the address information of the second node. Because the first autonomous system and the second autonomous system are neighbors, the second node in the second autonomous system is a non-attack node, so that the first node can be connected to at least one non-attack node. This can avoid that nodes to which the first node establishes connections are all attack nodes, and further avoid that the first node is controlled by the attack nodes, thereby improving blockchain communication security.

In the foregoing process, that a first node obtains address information of a second node from a first router includes: The first node receives a first message from the first router. The first message includes the address information of the second node. The first message is a resource public key infrastructure to router RTR interface protocol message.

In a comparative example, the first message is a BGP message, an existing BGP open message may be extended, so that the BGP open message may indicate whether a device sending the BGP open message has a capability of carrying the address information of the node. An existing BGP update message is extended, so that the BGP update message can carry the address information of the node. In this way, the first node in the first AS can obtain the address information of the second node in the second AS by using the BGP update message, and then the first node can first establish the connection to the second node based on the address information of the second node. It is only required that the existing BGP messages need to be extended so that the BGP messages can carry the address information.

The first message is an RTR message, and a new RTR message is defined, so that the first node in the first AS can obtain the address information of the second node in the second AS by using the RTR message (an RTR content message), and then the first node can first establish the connection to the second node based on the address information of the second node.

In a comparative example, the first message is a self-defined interface message, and a self-defined interface message is defined, so that the first node in the first AS can obtain the address information of the second node in the second AS by using the self-defined interface message, and then the first node can first establish the connection to the second node based on the address information of the second node.

In the foregoing process, after obtaining the address information of the second node, the first router may send the address information of the second node to the first node, so that the first node can obtain the address information of the second node in time.

In a possible implementation, before the first node receives the first message from the first router, the method further includes: The first node sends a request message to the first router. The request message is used to request to obtain the address information of the node in the neighboring autonomous system of the first autonomous system.

In the foregoing process, the first node obtains, by using the request message, the address information of the second node from the first router only when the first node needs to use the address information of the second node. This avoids unnecessary information sending performed by the first router, thereby avoiding a waste of signaling.

In a possible implementation, address information of the first node includes at least one of an identifier of the first node, an IP address of the first node, a MAC address of the first node, or a blockchain account of the first node; and the address information of the second node includes at least one of an identifier of the second node, an IP address of the second node, a MAC address of the second node, or a blockchain account of the second node.

In a possible implementation, the first node may further send the address information of the first node to the first router. In this way, the first router can obtain the address information of the first node, and send the address information of the first node to a router in the neighboring autonomous system of the first autonomous system, so that the router in the neighboring autonomous system of the first autonomous system can obtain the address information of the first node in time.

In the forgoing process, that the first node sends the address information of the first node to the first router includes: The first node sends a second message to the first router. The second message includes the address information of the first node. The second message is an RTR message.

In a possible implementation, before the first node establishes the connection to the second node based on the address information of the second node, the method includes: The first node adds the address information of the second node to a neighbor table of the first node.

Correspondingly, that the first node establishes a connection to the second node based on the address information of the second node includes: The first node establishes the connection to the second node based on the address information in the neighbor table.

In the foregoing process, the neighbor table includes the address information of the node in the neighboring autonomous system of the first autonomous system, and therefore the first node can establish the connection to the node in the neighboring autonomous system of the first autonomous system based on the address information in the neighbor table, where the node in the neighboring autonomous system of the first autonomous system is a non-attack node. In this way, the first node can establish a connection to the non-attack node, thereby improving blockchain communication security.

In a possible implementation, after the first node establishes the connection to the second node based on the address information of the second node, the method further includes: The first node establishes a connection to a third node, and obtains a first valid-node table from the third node. The first node obtains a second valid-node table from the second node. The first node determines a target valid-node table from the first valid-node table and the second valid-node table, and performs node discovery based on the target valid-node table.

In the foregoing process, the third node may be an endorsement node. By using the foregoing process, a problem that the first node is attacked because of malicious behavior of the endorsement node can be avoided.

According to a second aspect, an embodiment of this application provides a method for establishing a blockchain node connection. The method is applied to a blockchain system, and the method includes: A first router obtains address information of a second node, where the second node is located in a second autonomous system. The first router sends the address information of the second node to a first node, where the first router and the first node are located in a first autonomous system, and the first autonomous system and the second autonomous system are neighboring autonomous systems.

In the foregoing process, after the first node in the first autonomous system is started, the first node first obtains the address information of the second node in the second autonomous system (where the first autonomous system and the second autonomous system are neighbors), and establishes a connection to the second node based on the address information of the second node. Because the first autonomous system and the second autonomous system are neighbors, the second node in the second autonomous system is a non-attack node, so that the first node can be connected to at least one non-attack node. This can avoid that nodes to which the first node establishes connections are all attack nodes, and further avoid that the first node is controlled by the attack nodes, thereby improving blockchain communication security.

In the foregoing process, that the first router sends the address information of the second node to a first node includes: The first router sends a first message to the first node. The first message includes the address information of the second node. The first message is a resource public key infrastructure to router RTR interface protocol message.

In a comparative example, the first message is a BGP message, an existing BGP open message may be extended, so that the BGP open message may indicate whether a device sending the BGP open message has a capability of carrying the address information of the node. An existing BGP update message is extended, so that the BGP update message can carry the address information of the node. In this way, the first node in the first AS can obtain the address information of the second node in the second AS by using the BGP update message, and then the first node can first establish the connection to the second node based on the address information of the second node. It is only required that the existing BGP messages need to be extended so that the BGP messages can carry the address information, and therefore blockchain communication security can be improved by slightly modifying an existing solution.

The first message is an RTR message, and a new RTR message is defined, so that the first node in the first AS can obtain the address information of the second node in the second AS by using the RTR message (an RTR content message), and then the first node can first establish the connection to the second node based on the address information of the second node.

In a comparative example, the first message is a self-defined interface message, a self-defined interface message is defined, so that the first node in the first AS can obtain the address information of the second node in the second AS by using the self-defined interface message, and then the first node can first establish the connection to the second node based on the address information of the second node.

In the foregoing process, after obtaining the address information of the second node, the first router may send the address information of the second node to the first node, so that the first node can obtain the address information of the second node in time.

In a possible implementation, before the first router sends the first message to the first node, the method further includes: The first router receives a first request message sent by the first node. The first request message is used to request to obtain the address information of the node in the neighboring autonomous system of the first autonomous system.

In the foregoing process, the first router sends the first message to the first node only after receiving the first message sent by the first node. This avoids unnecessary information sending performed by the first router, thereby avoiding a waste of signaling.

In a comparative example, that a first router obtains address information of a second node includes: The first router receives a first border gateway protocol BGP message from a second router. The first BGP message includes the address information of the second node, and the second router is located in the second autonomous system.

In a possible implementation, before the first router sends the address information to the first node, the method further includes: The first router obtains an autonomous system path length of the address information, where the autonomous system path length is used to indicate a quantity of autonomous systems that the address information has passed through when the first router receives the address information. The first router determines that the autonomous system path length of the address information is 1.

In the foregoing process, when the first router determines that the autonomous system path length of the address information is 1, it can be ensured that the address information is the address information of the node in the neighboring autonomous system of the first autonomous system, and it can be determined that the first node can establish the connection to the node in the neighboring autonomous system of the first autonomous system based on the address information.

The first router receives a second message sent by the first node. The second message includes address information of the first node. The second message is at least a resource public key infrastructure to router RTR interface protocol message.

In a possible implementation, the address information of the first node includes at least one of an identifier of the first node, an IP address of the first node, a MAC address of the first node, or a blockchain account of the first node; and the address information of the second node includes at least one of an identifier of the second node, an IP address of the second node, a MAC address of the second node, or a blockchain account of the second node.

In a possible implementation, before the first router receives the second message sent by the first node, the method further includes: The first router sends a second request message to the first node. The second request message is used to request to obtain the address information of the first node.

In a comparative example, after the first router receives the address information of the first node sent by the first node, the method further includes: The first router sends a second BGP message to the second router. The second BGP message includes the address information of the first node.

According to a third aspect, an embodiment of this application provides a method for establishing a blockchain node connection. The method includes: A first node obtains address information of a second node, and adds the address information of the second node to a neighbor table of the first node. After the first node is started, the first node establishes a connection to the second node based on the address information in the neighbor table.

In the foregoing process, the neighbor table includes the address information of the node in a neighboring autonomous system of a first autonomous system, and therefore the first node can establish the connection to the node in the neighboring autonomous system of the first autonomous system based on the address information in the neighbor table, where the node in the neighboring autonomous system of the first autonomous system is a non-attack node. In this way, the first node can establish a connection to the non-attack node, thereby improving blockchain communication security.

In a possible implementation, the first node may further obtain address information of another node in the neighboring autonomous system of the first autonomous system, and update the neighbor table based on the address information of the another node. In this way, the neighbor table can include address information of a plurality of nodes in the neighboring autonomous system of the first autonomous system.

In a possible implementation, after the first node establishes the connection to the second node based on the address information in the neighbor table, the first node may further perform node discovery based on node information in a node table, and establish a connection to a discovered node.

It should be noted that in the third aspect, for a process of obtaining the address information of the second node by the first node, refer to the first aspect. Details are not described herein again.

According to a fourth aspect, an embodiment of this application provides a method for establishing a blockchain node connection. The method includes: A first node obtains address information of a second node, and establishes a connection to the second node based on the address information of the second node. The first node establishes a connection to a third node, and obtains a first valid-node table from the third node. The first node obtains a second valid-node table from the second node. The first node determines a target valid-node table from the first valid-node table and the second valid-node table, and performs node discovery based on the target valid-node table.

In the foregoing process, the third node may be an endorsement node. By using the foregoing process, a problem that the first node is attacked because of malicious behavior of the endorsement node can be avoided.

It should be noted that in the fourth aspect, for a process of obtaining the address information of the second node by the first node, refer to the first aspect. Details are not described herein again.

According to a fifth aspect, an embodiment of this application provides an apparatus for establishing a blockchain node connection. The apparatus is applied to a first node in a blockchain system, and the apparatus includes:

a receiving module, configured to obtain address information of a second node from a first router, where the first router and the first node are located in a first autonomous system, the second node is located in a second autonomous system, and the first autonomous system and the second autonomous system are neighboring autonomous systems; and
a processing module, configured to establish a connection to the second node based on the address information of the second node.

The receiving module is specifically configured to receive a first message from the first router. The first message includes the address information of the second node. The first message is a resource public key infrastructure to router RTR interface protocol message.

In a possible implementation, the apparatus further includes a sending module.

The sending module is configured to: before the receiving module receives the first message from the first router, send a request message to the first router. The request message is used to request to obtain the address information of the node in the neighboring autonomous system of the first autonomous system.

In a possible implementation, address information of the first node includes at least one of an identifier of the first node, an IP address of the first node, a MAC address of the first node, or a blockchain account of the first node.

The address information of the second node includes at least one of an identifier of the second node, an IP address of the second node, a MAC address of the second node, or a blockchain account of the second node.

In a possible implementation, before the processing module establishes the connection to the second node based on the address information of the second node, the processing module is further configured to add the address information of the second node to a neighbor table of the first node.

The processing module is specifically configured to establish the connection to the second node based on the address information in the neighbor table.

In a possible implementation, after the processing module establishes the connection to the second node based on the address information of the second node, the processing module is further configured to:

establish a connection to a third node, and obtain a first valid-node table from the third node;
obtain a second valid-node table from the second node; and
determine a target valid-node table from the first valid-node table and the second valid-node table, and perform node discovery based on the target valid-node table.

In a possible implementation, the sending module is further configured to send the address information of the first node to the first router.

The sending module is specifically configured to send a second message to the first router. The second message includes the address information of the first node. The second message is an RTR message.

According to a sixth aspect, an embodiment of this application provides an apparatus for establishing a blockchain node connection. The apparatus is applied to a first router in a blockchain system, and the apparatus includes:

a receiving module, configured to obtain address information of a second node, where the second node is located in a second autonomous system; and a sending module, configured to send the address information of the second node to the first node, where the first router and the first node are located in a first autonomous system, and the first autonomous system and the second autonomous system are neighboring autonomous systems.

The sending module is specifically configured to send a first message to the first node. The first message includes the address information of the second node. The first message a resource public key infrastructure to router RTR interface protocol message.

In a possible implementation, the receiving module is further configured to: before the sending module sends the first message to the first node, receive a first request message sent by the first node. The first request message is used to request to obtain the address information of the node in the neighboring autonomous system of the first autonomous system.

In a comparative example, the receiving module is specifically configured to receive a first border gateway protocol BGP message from a second router. The first BGP message includes the address information of the second node, and the second router is located in the second autonomous system.

In a possible implementation, the apparatus further includes a processing module.

The processing module is configured to: before the sending module sends the address information to the first node, obtain an autonomous system path length of the address information, and determine that the autonomous system path length of the address information is 1, where the autonomous system path length is used to indicate a quantity of autonomous systems that the address information has passed through when the first router receives the address information.

The receiving module is further configured to receive a second message sent by the first node. The second message includes address information of the first node. The second message is a resource public key infrastructure to router RTR interface protocol message.

In a possible implementation, the address information of the first node includes at least one of an identifier of the first node, an IP address of the first node, a MAC address of the first node, or a blockchain account of the first node.

The address information of the second node includes at least one of an identifier of the second node, an IP address of the second node, a MAC address of the second node, or a blockchain account of the second node.

In a possible implementation, the sending module is further configured to: before the receiving module receives the second message sent by the first node, send a second request message to the first node. The second request message is used to request to obtain the address information of the first node.

In a comparative example, the sending module is further configured to: after the receiving module receives the address information of the first node sent by the first node, send a second BGP message to the second router. The second BGP message includes the address information of the first node.

According to a seventh aspect, an embodiment of this application provides an apparatus for establishing a blockchain node connection, including a memory and a processor. The processor executes a program instruction in the memory, to implement the method for establishing a blockchain node connection in the first aspect.

According to an eighth aspect, an embodiment of this application provides an apparatus for establishing a blockchain node connection, including a memory and a processor. The processor executes a program instruction in the memory, to implement the method for establishing a blockchain node connection in the second aspect.

According to a ninth aspect, an embodiment of this application provides a computer-readable storage medium. The storage medium is configured to store a computer program. When being executed by a computer or a processor, the computer program is used to implement the methods for establishing a blockchain node connection in the foregoing aspects.

According to a tenth aspect, an embodiment of this application provides a computer program product including an instruction. When the computer program product is run on a computer, the computer is enabled to perform the methods for establishing a blockchain node connection in the foregoing aspects.

According to the method and the apparatus for establishing a blockchain node connection, and the device that are provided in embodiments of this application, after the first node in the first AS is started, the first node first obtains the address information of the second node in the second AS (where the first AS and the second AS are neighbors), and establishes the connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

## BRIEF DESCRIPTION OF DRAWINGS

FIG. 1 is a diagram of a system architecture according to an embodiment of this application;
FIG. 2 is a schematic flowchart of a method for establishing a blockchain node connection according to an embodiment of this application;
FIG. 3 is a schematic structural diagram of a BGP update message according to an embodiment of this application;
FIG. 4 is a schematic flowchart of another method for establishing a blockchain node connection according to an embodiment of this application;
FIG. 5 is a schematic diagram of message forwarding according to an embodiment of this application;
FIG. 6 is a schematic structural diagram of a BGP open message according to an embodiment of this application;
FIG. 7A and FIG. 7B are schematic diagrams of a process of establishing a node connection according to an embodiment of this application;
FIG. 8 is a schematic flowchart of still another method for establishing a blockchain node connection according to an embodiment of this application;
FIG. 9 is a schematic structural diagram of a message according to an embodiment of this application;
FIG. 10 is a schematic structural diagram of another message according to an embodiment of this application;
FIG. 11 is a schematic structural diagram of still another message according to an embodiment of this application;
FIG. 12 is a schematic flowchart of yet another method for establishing a blockchain node connection according to an embodiment of this application;
FIG. 13 is a schematic flowchart of still yet another method for establishing a blockchain node connection according to an embodiment of this application;
FIG. 14 is a schematic diagram of a process of establishing a node connection according to this application;
FIG. 15 is a schematic flowchart of a further method for establishing a blockchain node connection according to an embodiment of this application;
FIG. 16 is a schematic structural diagram of an apparatus for establishing a blockchain node connection according to an embodiment of this application;
FIG. 17 is a schematic structural diagram of another apparatus for establishing a blockchain node connection according to an embodiment of this application;
FIG. 18 is a schematic structural diagram of still another apparatus for establishing a blockchain node connection according to an embodiment of this application;
FIG. 19 is a schematic structural diagram of yet another apparatus for establishing a blockchain node connection according to an embodiment of this application;
FIG. 20 is a schematic structural diagram of hardware of an apparatus for establishing a blockchain node connection according to this application; and
FIG. 21 is a schematic structural diagram of hardware of another apparatus for establishing a blockchain node connection according to this application. The embodiments which use BGP for exchange of address information between the first node and the first router (e.g. the embodiment described with reference to fig. 4) are not falling within the scope of the claim.

## DESCRIPTION OF EMBODIMENTS

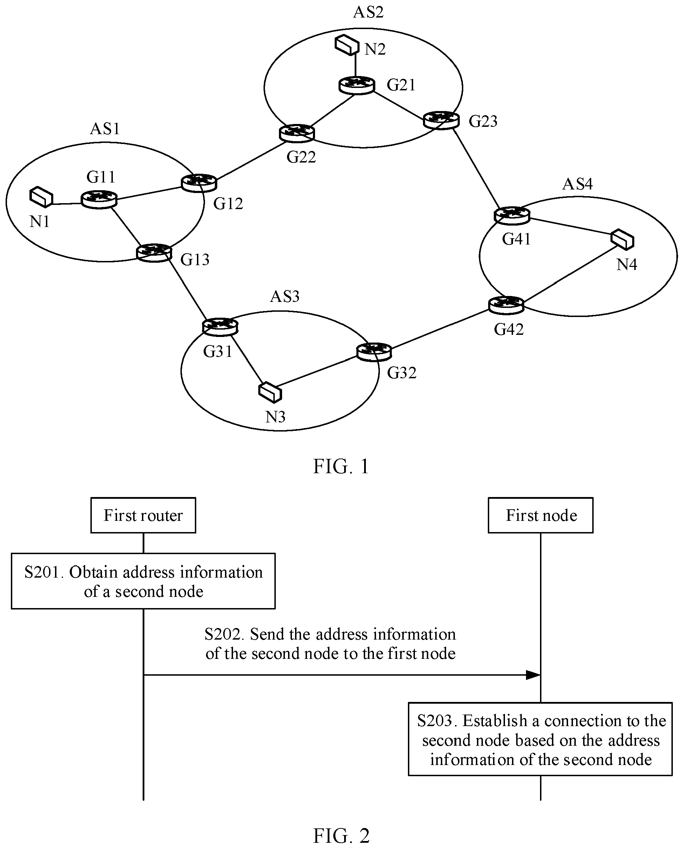

FIG. 1 is a diagram of a system architecture according to an embodiment of this application. Referring to FIG. 1, the system architecture includes a plurality of autonomous systems (Autonomous System, AS), and at least one blockchain node (referred to as a node for short below) and at least one border router are disposed in each AS.

Optionally, the node in this application may be a server provided by an Internet service provider (Internet Service Provider, ISP).

Optionally, a border router is a router disposed at an edge of an AS, and the border router may communicate with a border router in another AS. For example, referring to FIG. 1, a router G12 and a router G13 in an AS1 are border routers, a router G22 and a router G23 in an AS2 are border routers, a router G31 and a router G32 in an AS3 are border routers, and G41 and G42 in an AS4 are border routers. An AS may further include a route reflector, and the route reflector may forward a message between a node in the AS and a border router in the AS. For example, the AS1 includes a route reflector G11, and the AS2 includes a route reflector G21. It should be noted that in an AS, a node may directly communicate with a border router, or may communicate with a border router by using a route reflector.

A neighbor relationship between different ASs may be configured. Optionally, a neighbor relationship between ASs may be preconfigured, or a neighbor relationship between ASs may be configured through negotiation between border routers in different ASs. Optionally, one or more neighboring ASs may be configured for one AS. If two ASs are configured to be neighbors, a node in one AS and a node in the other AS are neighbors. For a node in any AS, it may be considered that a node in a neighboring AS of the AS is a non-attack node. For example, if the AS1 and the AS2 are neighbors, for a node in the AS1, nodes in the AS2 are all non-attack nodes.

Optionally, border routers in different ASs may be configured, to configure a neighbor relationship between different ASs. An address of a border router in an AS may be added to a border router in another AS, and the address may be set to a router address corresponding to the neighboring AS. For example, assuming that the AS1 includes a border router 1 and the AS2 includes a border router 2, an address of the border router 2 may be added to the border router 1, and the address of the border router 2 may be set to a router address corresponding to the neighboring AS of the AS1; and an address of the border router 1 may be added to the border router 2, and the address of the border router 1 may be set to a router address corresponding to the neighboring AS of the AS2.

In this application, after a first node in a first AS is started, the first node first obtains address information of a second node in a second AS (where the first AS and the second AS are neighbors), and establishes a connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

Specific embodiments are used below to describe in detail the technical solutions of this application. It should be noted that the following several embodiments may be used in combination. Same or similar content is not repeated in different embodiments.

It should be noted that in the embodiments of this application, an example is used for description in which a first router and a first node are disposed in a first AS, a second router and a second node are disposed in a second AS, and the first AS and the second AS are neighbors.

FIG. 2 is a schematic flowchart of a method for establishing a blockchain node connection according to an embodiment of this application. Referring to FIG. 2, the method may include the following steps.

S201. A first router obtains address information of a second node.

The second node is located in a second AS, and the second node is any node that has been started in the second AS.

Optionally, the first router may be a border router in a first AS.

Optionally, the address information of the second node includes at least one of an identifier of the second node, an IP address of the second node, a MAC address of the second node, or a blockchain account of the second node.

The identifier of the second node may be an identification (Identification, ID) of the second node.

For example, when a blockchain is implemented based on an Ethereum technology, the address information of the second node may include the identifier of the second node and the IP address of the second node, or the address information of the second node may include the identifier of the second node, the IP address of the second node, and the blockchain account of the second node.

Optionally, the first router may obtain the address information of the second node from a second router. The second router may be a border router in the second AS. For example, an address of the first router may be added to the second router. After obtaining the address information of the second node, the second router may send the address information of the second node to the first router based on the address of the first router.

Optionally, the first router may receive a Border Gateway Protocol (Border Gateway Protocol, BGP) message sent by the second router, where the BGP message includes the address information of the second node.

Optionally, an existing BGP update (update) message may be extended, so that the BGP update message carries the address information.

For example, the first router may receive the BGP update message sent by the second router, where the BGP update message includes the address information of the second node.

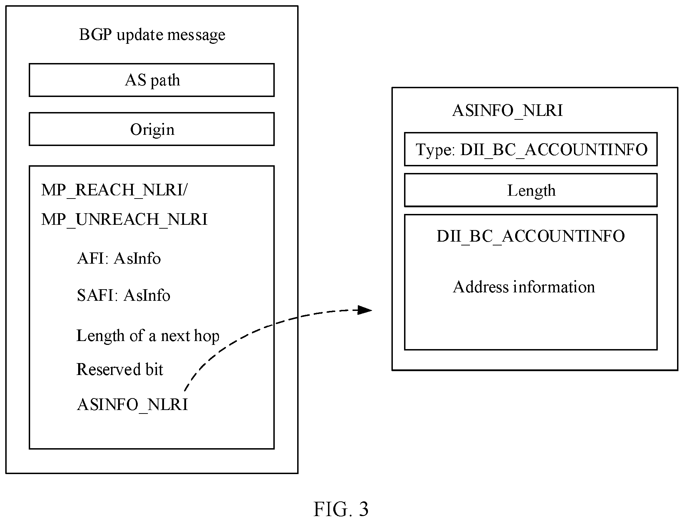

The following describes a structure of the BGP update message in this application with reference to FIG. 3.

FIG. 3 is a schematic structural diagram of a BGP update message according to an embodiment of this application. Referring to FIG. 3, the BGP update message includes an AS path (AS-Path) attribute, an origin (Origin) attribute, and a multiprotocol reachable network layer reachable information (Multiprotocol Reachable Network Layer Reachable Information, MP_REACH_NLRI)/multiprotocol unreachable network layer reachable information (Multiprotocol Unreachable Network Layer Reachable Information, MP_UNREACH_NLRI) attribute. The MP_REACH_NLRI/MP_UNREACH_NLRI attribute includes an address family identifier (Address Family Identifier, AFI), a subsequent address family identifier (Subsequent Address Family Identifier, SAFI), a length of a next hop, a reserved bit, and autonomous system information network layer reachable information (Autonomous System Information_Network Layer Reachable Information, ASINFO_NLRI). ASINFO_NLRI is an extended attribute in the existing BGP update message in this application, and the BGP message can carry address information of a node by using the extended attribute. A DII_BC_ACCOUNTINFO attribute is defined in ASINFO_NLRI that is obtained through extension, and the DIIBC_ACCOUNTINFO attribute includes the address information of the node. Optionally, the address information of the node includes at least one of an identifier of the node, an IP address of the node, a MAC address of the node, or a blockchain account of the node.

It should be noted that, when a plurality of ASs are neighbors of the first AS, and the address of the first router is added to all border routers in the plurality of neighboring ASs, the first router may obtain address information of a plurality of nodes from a plurality of routers.

For example, it is assumed that an AS1 includes a router 1 and a node 1, an AS2 includes a router 2 and a node 2, and an AS3 includes a router 3 and a node 3. It is assumed that the AS1 and the AS2 are neighbors, the AS1 and the AS3 are neighbors, an address of the router 1 is added to the router 2 as a router address corresponding to the neighboring AS, and the address of the router 1 is also added to the router 3 as a router address corresponding to the neighboring AS. In this case, the router 1 may obtain address information of the node 2 from the router 2, and the router 2 may further obtain address information of the node 3 from the router 3.

S202. The first router sends the address information of the second node to a first node.

Both the first router and the first node are located in the first AS. The first router may directly send the address information of the second node to the first node, or the first router may send the address information of the second node to the first node by using another router in the first AS.

Optionally, after obtaining the address information of the second node, the first router may cache the address information of the second node, and send the address information of the second node to the first node after the first node is started next time. After the first node is started, the first node sends, to the first router, a message used to indicate that the first node has been started. Therefore, the first router may send the address information of the second node to the first node after receiving the message.

Optionally, the first router may proactively send the address information of the second node to the first node. Alternatively, the first router may send the address information of the second node to the first node after receiving a request message of the first node.

S203. The first node establishes a connection to the second node based on the address information of the second node.

Optionally, the first node may send a connection establishment request to the second node based on the address information of the second node, to establish the connection to the second node.

Optionally, after S203 is performed, the first node may further establish a connection to another node. For example, the first node may request, based on a node table (NodeTable) stored in the first node, to establish a connection to another node, or the first node may receive a connection request sent by another node, to establish a connection to the another node.

According to the method for establishing a blockchain node connection provided in this embodiment of this application, after the first node in the first AS is started, the first node first obtains the address information of the second node in the second AS (where the first AS and the second AS are neighbors), and establishes the connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

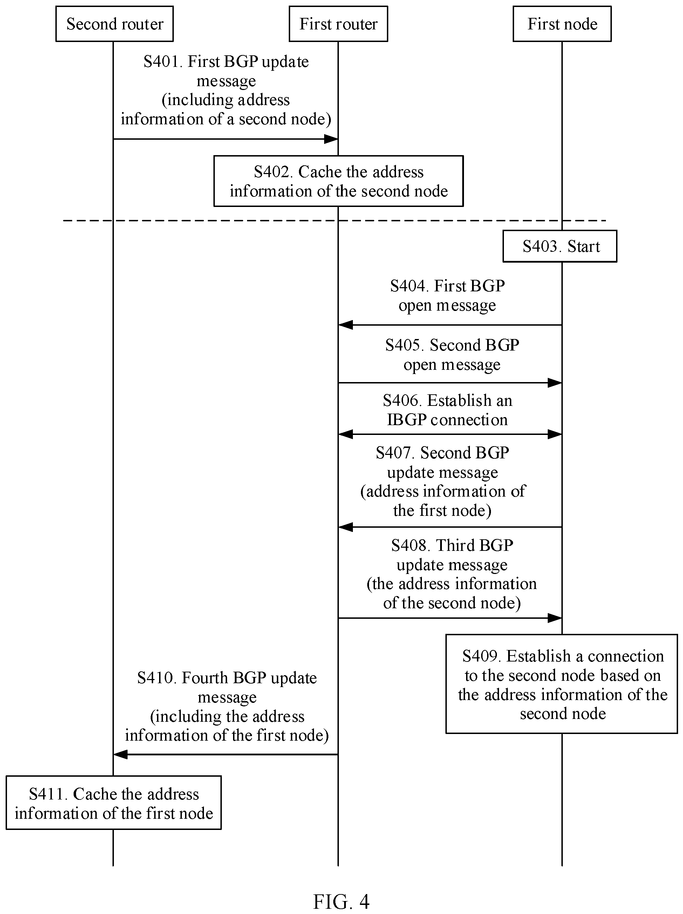

Based on any of the foregoing embodiments, the following details the method in the foregoing method embodiment with reference to embodiments shown in FIG. 4 to FIG. 6.

FIG. 4 is a schematic flowchart of another method for establishing a blockchain node connection according to an embodiment of this application. Referring to FIG. 4, the method may include the following steps.

S401. A second router sends a first BGP update message to a first router.

The first BGP update message includes address information of a second node.

Optionally, the second node is currently in a started state.

Optionally, after obtaining the address information of the second node, the second router may proactively send the first BGP update message to the first router.

Optionally, the first BGP update message may include address information of a plurality of second nodes; or the second router may send a plurality of first BGP update messages to the first router, where each first BGP update message includes address information of one second node. In this way, the first router can obtain address information of all second nodes that have been started currently in a second AS.

Optionally, there may be one or more second routers. When there are a plurality of second routers, the plurality of second routers may be located in different ASs, and the ASs in which all the second routers are located are all neighbors of an AS in which the first router is located.

For example, it is assumed that the first router is a router 1, and the first router is located in an AS1; there are two second routers: a router 2 and a router 3, where the router 2 is located in an AS2, and the router 3 is located in an AS3; and the AS1 and the AS2 are neighbors, and the AS1 and the AS3 are also neighbors. In this case, the router 2 may send address information of a node in the AS2 to the router 1, and the router 3 may send address information of a node in the AS3 to the router 1.

It should be noted that for a structure of the first BGP update message, refer to FIG. 3. Details are not described herein again.

S402. The first router caches the address information of the second node based on the first BGP update message.

Optionally, the first router may obtain the address information of the second node from the first BGP update message, and cache the address information of the second node.

It should be noted that the first router may receive a first BGP update message sent by one or more second routers. If receiving first BGP update messages sent by a plurality of second routers, the first router caches address information of a second node in each first BGP update message.

Optionally, after receiving the first BGP update message, the first router may determine, based on the first BGP update message, whether the second node is a node in the neighboring AS of a first AS.

Optionally, the first BGP update message includes an AS path, and the first router may determine an AS path length based on the AS path. The AS path length is used to indicate a quantity of autonomous systems that the first BGP update message has passed through during transmission of the first BGP update message. If the AS path length is 1, it is determined that the second node is a node in the neighboring AS of the first AS. If the AS path length is greater than 1, it is determined that the second node is not a node in the neighboring AS of the first AS.

Optionally, each time the BGP update message passes through an AS, the BGP update message carries an identifier of the AS. Correspondingly, the first router may determine the path length based on a quantity of AS identifiers included in the AS path in the first BGP update message. The path length may be the quantity of AS identifiers included in the AS path.

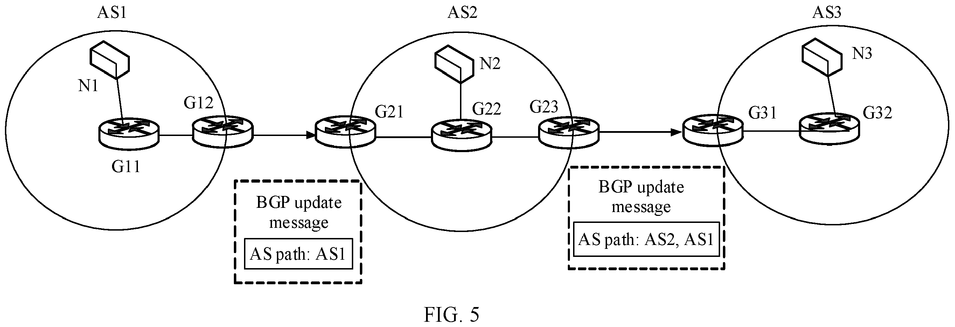

The following describes the path length with reference to FIG. 5.

FIG. 5 is a schematic diagram of message forwarding according to an embodiment of this application. Referring to FIG. 5, an AS1, an AS2, and an AS3 are included. A node N1, a route reflector G11, and a router G12 are disposed in the AS1. Anode N2, a router G21, a route reflector G22, and a router G23 are disposed in the AS2. A node N3, a router G31, and a route reflector G32 are disposed in the AS3.

Assuming that the router in the AS1 needs to communicate with the router in the AS3 by using the routers in the AS2, when the router in the AS1 needs to send a BGP update message to the router in the AS3, the router G12 may first send the BGP update message to the router G21. The BGP update message is sent from the AS1, and therefore an AS path in the BGP update message includes an identifier of the AS1, that is, the AS path is: the AS1. After receiving the BGP update message, the router G21 may determine, based on the AS path (the AS1), that a path length is 1.

The router G21 may send the BGP update message to the router G23 by using the route reflector G22, and the router G23 sends the BGP update message to the router G31. In this case, the BGP update message has passed through the AS2, and therefore the AS path in the BGP update message further includes an identifier of the AS2, that is, the AS path is: the AS2, the AS1. After receiving the BGP update message, the router G31 may determine, based on the AS path (the AS2, the AS1), that the path length is 2.

It should be noted that if a node in the first AS in which the first router is located is in a started state, the first router may directly send the address information of the second node to the node that is in a started state in the first AS. If a first node in the first AS in which the first router is located is not in a started state, the first router may send the cached address information of the second node to the first node after the first node is started.

The following describes, by using S403 to S411, a process of sending the address information of the second node by the first router to the first node.

S403. Start the first node.

S404. The first node sends a first BGP open (Open) message to the first router.

The first BGP open message includes indication information used to indicate whether the first node has a capability of carrying the address information of the node.

Optionally, the first BGP open message may further indicate that the first node has been started.

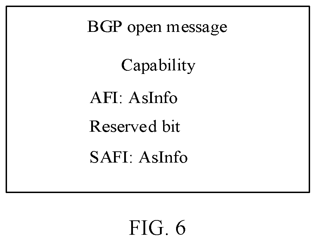

The following describes a structure of the BGP open message in this application with reference to FIG. 6.

FIG. 6 is a schematic structural diagram of a BGP open message according to an embodiment of this application. Referring to FIG. 6, the BGP open message includes an AFI, a reserved bit, and an SAFI. The SAFI is an extended attribute in the existing BGP update message in this application. A value AsInfo of the SAFI may indicate whether a device sending the BGP open message has a capability of carrying the address information of the node.

S405. The first router sends a second BGP open message to the first node based on the first BGP open message.

The second BGP open message includes indication information used to indicate whether the first router has a capability of carrying the address information of the node.

S406. The first node establishes an Internal Border Gateway Protocol (Internal Border Gateway Protocol, IBGP) connection to the first router based on the second BGP open message.

Optionally, when the first node has the capability of carrying the address information of the node, and the first router also has the capability of carrying the address information of the node, the first node establishes the IBGP connection to the first router.

For example, when the first node determines that the second BGP open message includes the indication information used to indicate whether the first router has a capability of carrying the address information of the node, the first node establishes the IBGP connection to the first router.

S407. The first node sends a second BGP update message to the first router.

The second BGP update message includes address information of the first node.

It should be noted that for a structure of the first BGP update message, refer to FIG. 3. Details are not described herein again.

Optionally, S407 may be an optional step. In other words, S407 may not be performed.

Optionally, in S407, the first node may send the second BGP update message to the first router after receiving a second request message sent by the first router. The second request message is used to request to obtain the address information of the first node.

S408. The first router sends a third BGP update message to the first node.

The third BGP update message includes the address information of the second node.

It should be noted that for a structure of the third BGP update message, refer to FIG. 3. Details are not described herein again.

It should be noted that in S408, the first router may send the third BGP update message to the first node after receiving a first request message sent by the first node. The first request message is used to request to obtain the address information of the node in the neighboring AS (the second AS) of the first AS.

S409. The first node establishes a connection to the second node based on the address information of the second node.

Optionally, the first node may first add the address information of the second node to a neighbor table. After determining that the first node obtains the neighbor table, the first node may first establish a connection to a corresponding node based on address information in the neighbor table. Because the neighbor table includes the address information of the second node, the first node may establish the connection to the second node.

Optionally, the first node may dynamically maintain the neighbor table, so that second nodes in the neighbor table are all reachable (in a started state). For example, before a node in the neighbor table goes offline, the second node may send a go-offline notification to the first node by using the second router and the first router, so that the first node deletes address information of the node from the neighbor table. Alternatively, each time after the first node goes offline, the first node clears the neighbor table. Alternatively, when the first node receives no response after sending a connection request to one of neighboring nodes, the first node determines that the node is not in a started state, and then the first node deletes address information of the node from the neighbor table. It should be noted that the foregoing is merely used as an example to describe a process of dynamically maintaining the neighbor table by the first node. This is not specifically limited in this application.

Optionally, the neighbor table of the first node may include some address information in the third BGP update message. In this case, the first node may not add the some address information to the neighboring node any longer, to avoid that the neighbor table includes repeated address information.

S410. The first router sends a fourth BGP update message to the second router.

The fourth BGP update message includes the address information of the first node.

It should be noted that for a structure of the fourth BGP update message, refer to FIG. 3. Details are not described herein again.

S411. The second router caches the address information of the first node.

Optionally, after the second router caches the address information of the first node, and after the second node in the second AS is started, the second router may send the address information of the first node to the second node.

It should be noted that for a process of sending the information of the first node by the second router to the second node, refer to the process of sending the address information of the second node by the first router to the first node. Details are not described herein again.

It should be noted that S410 and S411 may be optional steps. In other words, S410 and S411 may not be performed. In an actual application process, if S407 is performed, S410 and S411 may also be performed; or if S407 is not performed, S410 and S411 may not be performed either.

In the embodiment shown in FIG. 4, the existing BGP open message is extended, so that the BGP open message may indicate whether the device sending the BGP open message has a capability of carrying the address information of the node. The existing BGP update message is extended, so that the BGP update message can carry the address information of the node. In this way, the first node in the first AS can obtain the address information of the second node in the second AS by using the BGP update message, and then the first node can first establish the connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

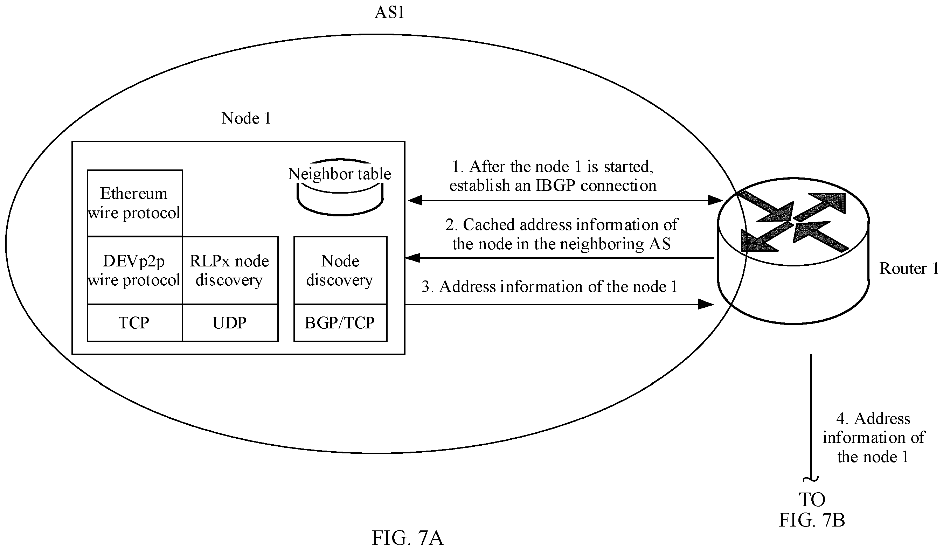

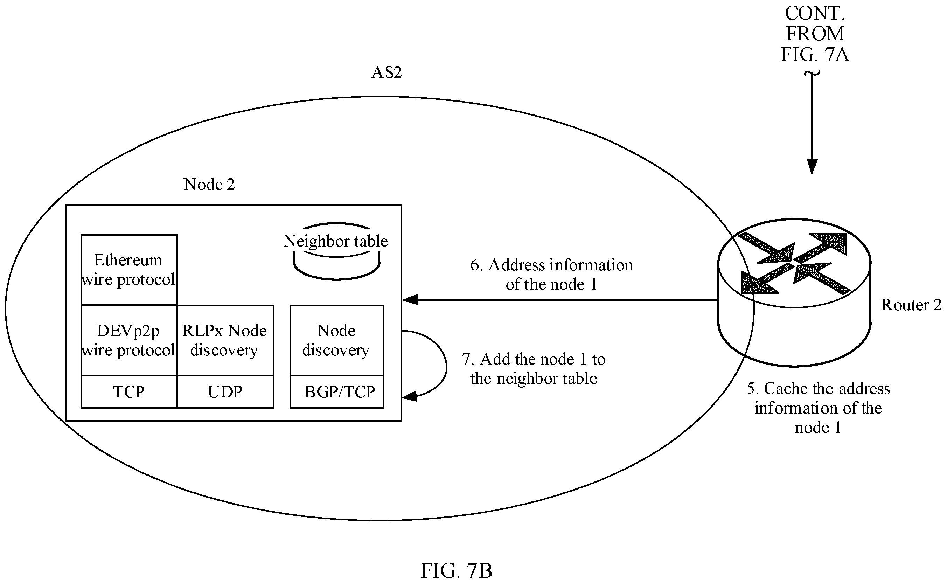

The following details, by using a specific example with reference to FIG. 7A and 7B, the method shown in FIG. 4.

FIG. 7A and FIG. 7B are schematic diagrams of a process of establishing a node connection according to an embodiment of this application. Referring to FIG. 1, the node 1 and the router 1 are disposed in the AS1, and the node 2 and the router 2 are disposed in the AS2, where the AS1 and the AS2 are neighbors. It is assumed that the node 1, the node 2, the router 1, and the router 2 all have a capability of adding address information to a BGP update message.

The node 1 and the node 2 are Ethereum nodes, and the Ethereum node is a type of blockchain node. Referring to FIG. 7A and FIG. 7B, the node 1 and the node 2 may communicate with each other based on an Ethereum network protocol.

The Ethereum network protocol is a Developers Peer to Peer (Developers Peer to Peer, DEVp2p) protocol. The DEVp2p protocol includes a Recursive Length Prefix extended (Recursive Length Prefix extended, RLPx) Node Discovery (Node Discover) Protocol, an Ethereum Wire Protocol (Ethereum Wire Protocol), a DEVp2p Wire Protocol (DEVp2p Wire Protocol), a User Diagram Protocol (User Diagram Protocol, UDP), and a Transmission Control Protocol (Transmission Control Protocol, TCP). The RLPx Node Discovery (RLPxNode Discover) protocol is used to discover an Ethereum node by using a node discovery algorithm. The DEVp2p Wire Protocol (DEVp2p Wire Protocol) is used to establish a P2P connection between Ethereum nodes. The Ethereum Wire Protocol (Ethereum Wire Protocol) is used to synchronize transaction block information between Ethereum nodes, participate in consensus, and the like.

Referring to FIG. 7A and 7B, in step 1, after the node 1 is started, because both the node 1 and the router 1 have a capability of adding address information to a BGP update message, the node 1 can establish an IBGP connection to the router 1.

In step 2, after the node 1 establishes the IBGP connection to the router 1, the router 1 may send address information, cached in the router 1, of the node in the neighboring AS to the node 1. After receiving the address information, sent by the router 1, of the node in the neighboring AS, the node 1 adds the received address information to a neighbor table, and establishes a connection to the node in the neighboring AS based on the address information in the neighbor table. After establishing the connection to the node in the neighboring AS, the node 1 may further establish a connection to a node in a node table (NodeTable). The node table is a reachable-node table, of a node, that is maintained. For example, the node table may include address information of a node that has been in contact with the node recently and that is reachable for the node.

In step 3, the node 1 sends address information of the node 1 to the router 1. For example, the node 1 may send a BGP update message 1 to the router 1, where the BGP update message 1 includes the address information of the node 1.

In step 4, the router 1 sends the address information of the node 1 to the router 2. For example, the router 1 may send a BGP update message 2 to the router 2, and add the address information of the node 1 to the BGP update message 2. In step 4, if the AS1 and another AS are also neighbors, the router 1 further sends the address information of the node 1 to a router in the another neighboring AS of the AS1.

In step 5, the router 2 may cache the address information of the node 1.

In step 6, assuming that the node 2 in the AS2 is a started state, the router 2 may directly send the address information of the node 1 to the node 2. For example, the router 2 may send a BGP update message 3 to the node 2, where the BGP update message 3 includes the address information of the node 1. It should be noted that if the AS2 further includes another node that has been started, after the router 2 receives the address information of the node 1, the router 2 further sends the address information of the node 1 to the another node that has been started. If the AS2 further includes another node that has not been started, the router 2 may send the address information of the node 1 to the another node that has not been started, after the another node is started.

In step 7, after receiving the address information of the node 1, the node 2 adds the address information of the node 1 to the neighbor table. When the node 2 is started next time, the node 2 may establish the connection to the node in the neighboring AS based on the address information of the node in the neighbor table.

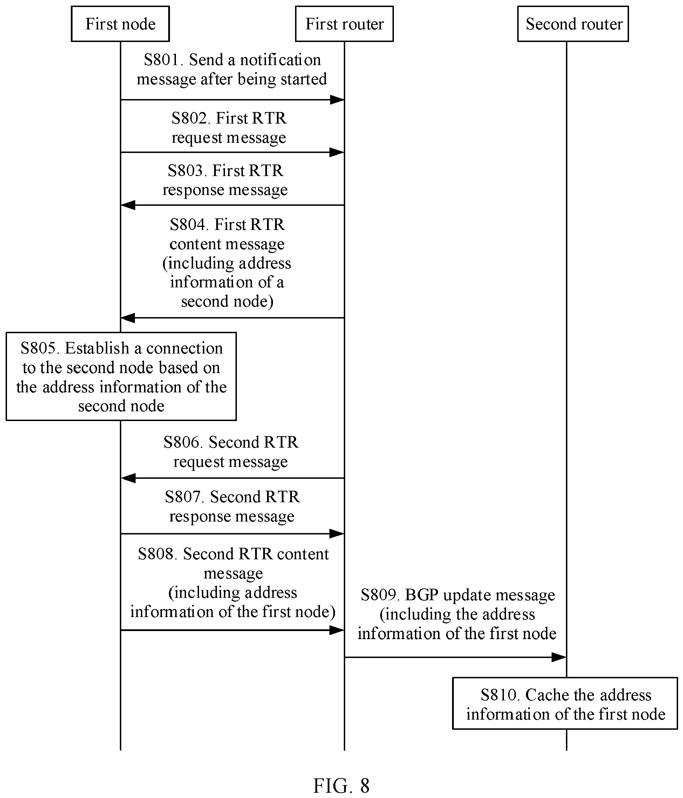

FIG. 8 is a schematic flowchart of still another method for establishing a blockchain node connection according to an embodiment of this application. Referring to FIG. 8, the method may include the following steps.

S801. After a first node is started, the first node sends a notification message to a first router.

The notification message is used to indicate that the first node has been started.

Optionally, the notification message may be a Notify message.

S802. The first node sends a first RTR request message to the first router.

The first Resource Public Key Infrastructure (Resource Public Key Infrastructure, RPKI) to Router (RPKI To Router, RTR) interface protocol request message is used to request address information of a node in a neighboring AS of a first AS.

Optionally, the first RTR request message may be an implementation of a first request message.

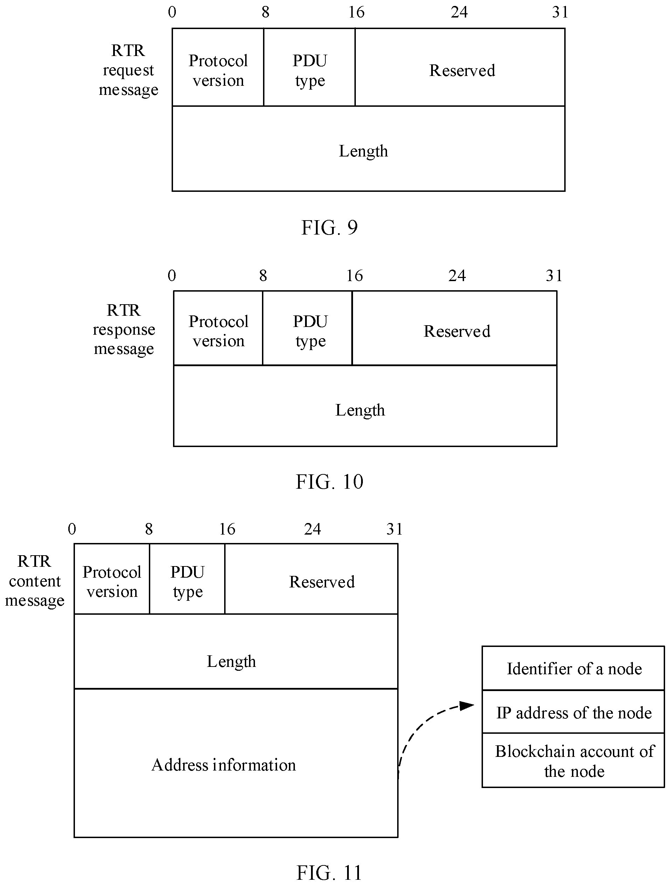

For example, the first RTR request message may be an Account Query message. The Account Query message may be shown in FIG. 9.

FIG. 9 is a schematic structural diagram of a message according to an embodiment of this application. Referring to FIG. 9, the Account Query message may occupy 64 bits. A $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ bit are reserved bits, and a $32^{th}$ bit to a $63^{th}$ bit are used to indicate a length. The PDU type may indicate a function of the Account Query message, that is, indicate that the Account Query message is used to request to obtain address information.

S803. The first router sends a first RTR response message to the first node.

Optionally, the first RTR response message may be an Account Response message. The Account Response message may be shown in FIG. 10. Details are not described herein.

FIG. 10 is a schematic structural diagram of another message according to an embodiment of this application. Referring to FIG. 10, the Account Response message may occupy 64 bits. A $0^{th}$ bit to a $7^{th}$ are used to indicate a protocol version, an $8^{th}$ bit to a $15^{th}$ are used to indicate a PDU type, a $16^{th}$ bit to a $31^{th}$ are reserved bits, and a $32^{th}$ bit to a $63^{th}$ are used to indicate a length. The PDU type may indicate a function of the Account Query message, that is, responding to the request message about obtaining address information.

S804. The first router sends a first RTR content message to the first node, where the first RTR content message includes address information of a second node.

The second node is the node in the neighboring AS of the first AS. The address information of the second node is the address information, cached in the first router, of the node in the neighboring AS of the first AS.

Optionally, the first RTR content message may be an account information (AccountInfo) message, and the first router adds the address information, cached in the first router, of the node in the neighboring AS to the account information message. The Account Query message may be shown in FIG. 11.

FIG. 11 is a schematic structural diagram of still another message according to an embodiment of this application. Referring to FIG. 11, a quantity of bits occupied by the AccountInfo message is variable. A $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ are reserved bits, a $32^{th}$ bit to a $63^{th}$ bit are used to indicate a length, and other information bits are used to indicate address information. The PDU type may indicate a function of the AccountInfo message, that is, indicate that the AccountInfo message is used to carry address information. It should be noted that FIG. 11 is merely used as an example to describe content included in the address information, and does not constitute any limitation on the content included in the address information.

Optionally, after the first router completes sending of the first RTR content message to the first node, the first router may further send an End of Data message (End of Data message) to the first node.

S805. The first node establishes a connection to the second node based on the address information of the second node.

It should be noted that for an execution process of S804, refer to S409. Details are not described herein again.

S806. The first router sends a second RTR request message to the first node based on the notification message.

The second RTR request message is used to request to obtain address information of the first node.

Optionally, the second RTR request message may be an implementation of a second request message.

Optionally, the second RTR request message may be an Account Query (Account Query) message. The Account Query message may be shown in FIG. 9. Details are not described herein again.

S807. The first node sends a second RTR response message to the first router based on the Account Query message.

Optionally, the second RTR response message may be an Account Response (Account Response) message. The Account Response message may be shown in FIG. 10. Details are not described herein again.

S808. The first node sends a second RTR content message to the first router based on the Account Query message, where the second RTR content message includes the address information of the first node.

Optionally, the second RTR content message may be an account information (AccountInfo) message. The Account Query message may be shown in FIG. 11. Details are not described herein again.

Optionally, after the first node completes sending of the second RTR response message and the second RTR content message to the first router, the first node may further send an End of Data message (End of Data message) to the first router.

It should be noted that an execution sequence between S802 to S804 and S806 to S808 is not limited in this application.

S809. The first router sends a BGP update message to a second router, where the BGP update message includes the address information of the first node.

It should be noted that for a structure of the BGP update message, refer to FIG. 3. Details are not described herein again.

S810. The second router caches the address information of the first node.

Optionally, after the second router caches the address information of the first node, the node in the second AS may request to obtain the address information, cached in the second router, of the neighboring AS from the second router. For a process of requesting to obtain the address information, cached in the second router, of the neighboring AS from the second router by the node in the second AS, refer to S806 and S807. Details are not described herein again.

Optionally, the second router may further request to obtain, from the node in the second AS, the address information of the node in the second AS. For a process thereof, refer to S802 and S803. Details are not described herein again.

In the embodiment shown in FIG. 8, a new RTR message is defined, so that the first node in the first AS can obtain the address information of the second node in the second AS by using the RTR message (the RTR content message), and then the first node can first establish the connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

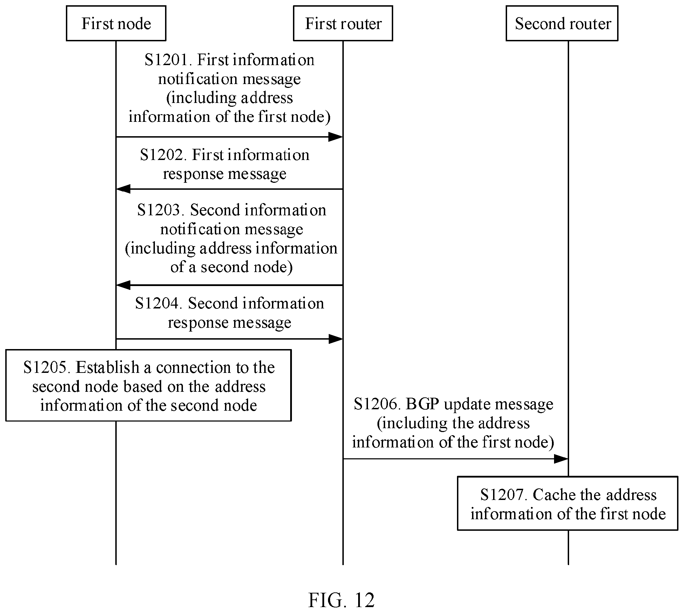

FIG. 12 is a schematic flowchart of yet another method for establishing a blockchain node connection according to an embodiment of this application. Referring to FIG. 12, the method may include the following steps.

S1201. After a first node is started, the first node sends a first information notification message to a first router.

The first information notification message includes address information of the first node.

The first information notification message is further used to indicate that the first node has been started.

Optionally, the first information notification message may be a Notify AccountInfo message.

Optionally, the first information notification message may be a self-defined interface message. For example, the first information notification message may be a User Datagram Protocol (User Diagram Protocol, UDP) message.

S1202. The first router sends a first information response message to the first node.

Optionally, the first information response message may be an Account Notify AccountAck message.

Optionally, the first information response message may be a self-defined interface message. For example, the first information response message may be a UDP message.

S1203. The first router sends a second information notification message to the first node.

The second information notification message includes address information of a second node, where the second node is a node in a neighboring AS of a first AS. The address information of the second node is address information, cached in the first router, of the node in the neighboring AS of the first AS.

Optionally, the second information notification message may be a Notify AccountInfo message.

Optionally, the second information notification message may be a self-defined interface message. For example, the second information notification message may be a UDP message.

S1204. The first node sends a second information response message to the first router.

Optionally, the second information response message may be an Account Notify AccountAck message.

Optionally, the second information response message may be a self-defined interface message. For example, the second information response message may be a UDP message.

S1205. The first node establishes a connection to the second node based on the address information of the second node.

It should be noted that for an execution process of S1405, refer to S409. Details are not described herein again.

S1206. The first router sends a BGP update message to a second router, where the BGP update message includes the address information of the first node.

It should be noted that for a structure of the BGP update message, refer to FIG. 3. Details are not described herein again.

S1207. The second router caches the address information of the first node.

Optionally, after the second router caches the address information of the first node, the second router may further send the address information of the first node to the node in the second AS. For a process of sending the address information of the first node by the second router to the node in the second AS, refer to S1203 and S1204. Details are not described herein again.

In the embodiment shown in FIG. 12, a self-defined interface message is defined, so that the first node in the first AS can obtain the address information of the second node in the second AS by using the self-defined interface message, and then the first node can first establish the connection to the second node based on the address information of the second node. Because the first AS and the second AS are neighbors, the second node in the second AS is a non-attack node, so that the first node can be connected to at least one non-attack node. This can avoid that nodes to which the first node establishes connections are all attack nodes, and further avoid that the first node is controlled by the attack nodes, thereby improving blockchain communication security.

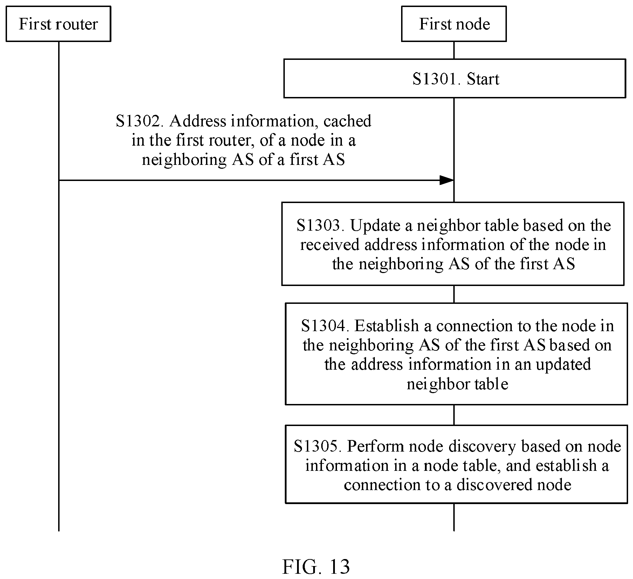

With reference to embodiments shown in FIG. 13 to FIG. 15, the following describes a method for establishing a blockchain node connection.

FIG. 13 is a schematic flowchart of still yet another method for establishing a blockchain node connection according to an embodiment of this application. Referring to FIG. 13, the method may include the following steps.

S1301. Start a first node.

S1302. A first router sends address information, cached in the first router, of a node in a neighboring AS of a first AS to the first node.

It should be noted that for an execution process of S1302, refer to any one of the foregoing method embodiments. Details are not described herein again.

S1303. The first node updates a neighbor table based on the received address information of the node in the neighboring AS of the first AS.

Optionally, the first node may add the received address information of the node in the neighboring AS of the first AS (referred to as a neighboring node for short below) to the neighbor table; or the first node may add, to the neighbor table, address information that is in the received address information of the neighboring node and that is not included in the neighbor table.

S1304. The first node establishes a connection to the node in the neighboring AS of the first AS based on the address information in an updated neighbor table.

Optionally, the first node may send a connection request to the neighboring node based on the address information in the updated neighbor table, and establishes the connection to the neighboring node after receiving a connection response sent by the neighboring node.

Optionally, the first node establishes outgoing connections to at a maximum of $\left\lfloor \frac{1}{4}(1 + \text{maxpeers}) \right\rfloor$ neighboring nodes, where maxpeers is a maximum quantity of connections that the first node establishes. For example, maxpeers may be 25.

S1305. The first node performs node discovery based on node information in a node table, and establishes a connection to a discovered node.

Optionally, the first node may generate a random node ID, obtain an exclusive-OR distance between a node ID of each node in the node table and the random node ID, and establish connections to X nodes whose exclusive-OR distances to the random node ID are closest.

Optionally, assuming that the first node establishes connections to Y neighboring nodes in S1304, X+Y is less than or equal to $\left\lfloor \frac{1}{2}(1 + \text{maxpeers}) \right\rfloor$.

An exclusive-OR distance between two nodes may be a quantity of "1" included in a result obtained after an exclusive OR operation is performed on node IDs of the two nodes.

Optionally, after establishing connections to at least one neighboring node and the discovered node, the first node may obtain blockchain information from the nodes to which the first node establishes the connections, where the blockchain information includes a chain length and difficulty information. If chain lengths or difficulty information obtained by the first node are different, the first node may determine a chain with a greatest chain length and greatest difficulty as a real chain, and establish a connection to the real chain.

In the embodiment shown in FIG. 13, the first node may establish a connection to at least one node in the neighboring AS of the first AS. The node in the neighboring AS of the first AS is a non-attack node, so that the first node can be connected to the at least one non-attack node. This can avoid that nodes to which the first node establishes connections are all attack nodes, and further avoid that the first node is controlled by the attack nodes, thereby improving blockchain communication security.

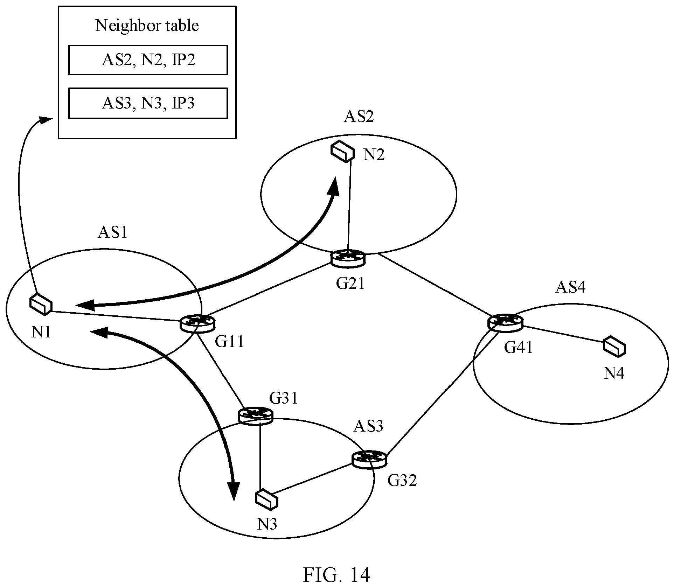

The following details, by using a specific embodiment with reference to FIG. 14, the embodiment shown in FIG. 13.

FIG. 14 is a schematic diagram of a process of establishing a node connection according to this application. Referring to FIG. 14, an AS1 and an AS2 are neighbors, and the AS1 and an AS3 are neighbors.

After a node N1 is started, the node N1 obtains address information, cached in a router G11, of nodes in the AS2 and the AS3 from the router G11, and updates a neighbor table based on the obtained address information of the nodes. It is assumed that an updated neighbor table includes address information (IP2) of a node N2 in the AS2 and address information (N3) of a node N3 in the AS3.

The node N1 first establishes connections to neighboring nodes based on the address information of the nodes in the neighbor table. To be specific, the node N1 establishes a connection to the node N2 based on the address (IP2) of the node N2, and the node N1 establishes a connection to the node N3 based on the address (IP3) of the node N3.

The node N1 may further discover another node by using a node discovery algorithm, and establish a connection to the another node. The node N2 and the node N3 are non-attack nodes, so that the node N1 can be connected to at least one non-attack node. This can avoid that nodes to which the node N1 establishes connections are all attack nodes, and further avoid that the node N1 is controlled by the attack nodes, thereby improving blockchain communication security.

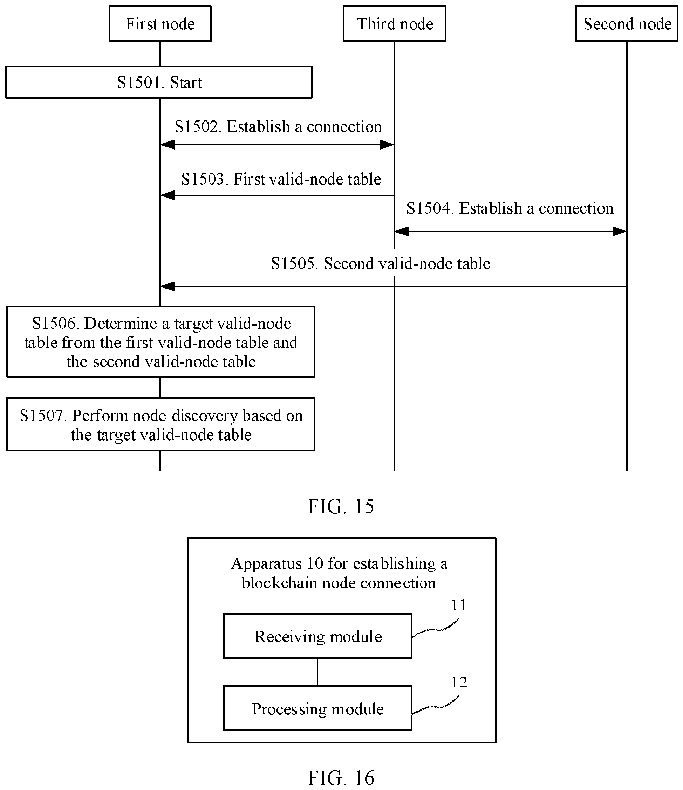

FIG. 15 is a schematic flowchart of a further method for establishing a blockchain node connection according to an embodiment of this application. Referring to FIG. 15, the method may include the following steps.

S1501. Start a first node.

S1502. The first node establishes a connection to a third node.

Optionally, the third node may be an endorsement node.

Optionally, after the first node establishes the connection to the third node, the third node may send first blockchain information to the first node, where the first blockchain information includes a chain length and difficulty information that are of a chain in which the third node is located.

S1503. The third node sends a first valid-node table to the first node.

The first valid-node table includes information about a plurality of nodes.

For example, information about a node may include one or more of the following information: a blockchain account of the node, an identifier of the node, and an IP address of the node.

S1504. The first node establishes a connection to a second node.

The second node is a node in a neighboring AS of a first AS.

It should be noted that for an execution process of S1504, refer to S1302 to S1304. Details are not described herein again.

Optionally, after the first node establishes the connection to the second node, the second node may send second blockchain information to the first node, where the first blockchain information includes a chain length and difficulty information that are of a chain in which the second node is located.

S1505. The second node sends a second valid-node table to the first node.

S1506. The first node determines a target valid-node table from the first valid-node table and the second valid-node table.

Optionally, the first node may determine a real chain based on the first blockchain information and the second blockchain information, and determine, from the first valid-node table and the second valid-node table, a valid-node table that includes a node in the real chain as the target valid-node table.

S1507. The first node performs node discovery based on the target valid-node table.

It should be noted that for an execution process of S1507, refer to S1305. Details are not described herein again.

In the embodiment shown in FIG. 15, the first node may establish a connection to at least one node in the neighboring AS of the first AS. The node in the neighboring AS of the first AS is a non-attack node, so that the first node can be connected to the at least one non-attack node. This can avoid that nodes to which the first node establishes connections are all attack nodes, and further avoid that the first node is controlled by the attack nodes. Further, the first node may obtain the valid-node table separately from the endorsement node and the neighboring node; determine the target valid-node table from the obtained valid-node tables; and perform node discovery based on the target valid-node table. This can further avoid a security problem caused by malicious behavior of the endorsement node.

FIG. 16 is a schematic structural diagram of an apparatus for establishing a blockchain node connection according to an embodiment of this application. The apparatus 10 for establishing a blockchain node connection may be applied to a first node in a blockchain system. The apparatus 10 for establishing a blockchain node connection may include:

a receiving module 11, configured to obtain address information of a second node from a first router, where the first router and the first node are located in a first autonomous system, the second node is located in a second autonomous system, and the first autonomous system and the second autonomous system are neighboring autonomous systems; and
a processing module 12, configured to establish a connection to the second node based on the address information of the second node.

Optionally, the receiving module 11 may perform steps, in the foregoing method embodiments, that are related to receiving actions of the first node. For example, the receiving module 11 may perform S202 in the embodiment in FIG. 2, S405 and S408 in the embodiment in FIG. 4, S803, S804, and the like in the embodiment in FIG. 8, S1202, S1203, and the like in the embodiment in FIG. 12, S1302 in the embodiment in FIG. 13, and S1503 and S1505 in the embodiment in FIG. 15.

Optionally, the processing module 12 may perform steps, in the foregoing method embodiments, that are related to processing actions of the first node. For example, the processing module 12 may perform S203 in the embodiment in FIG. 2, S409 in the embodiment in FIG. 4, S805 in the embodiment in FIG. 8, S1205 in the embodiment in FIG. 12, S1303 to S1305 in the embodiment in FIG. 13, and S1506 and S1507 in the embodiment in FIG. 15.

It should be noted that the apparatus 10 for establishing a blockchain node connection in this embodiment of this application can perform the technical solutions described in the foregoing method embodiments. An implementation principle and beneficial effects thereof are similar to those in the foregoing method embodiments. Details are not described herein again.

In a possible implementation, the receiving module 11 is specifically configured to receive a first message from the first router. The first message includes the address information of the second node. The first message is one of a border gateway protocol BGP message, a resource public key infrastructure to router RTR interface protocol message, or a self-defined interface message.

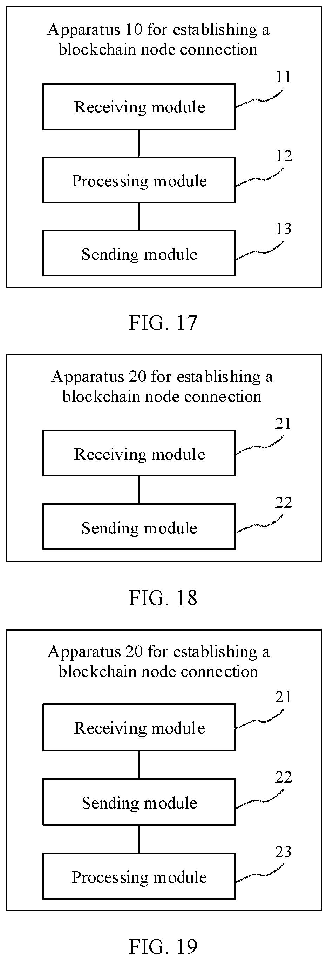

FIG. 17 is a schematic structural diagram of another apparatus for establishing a blockchain node connection according to an embodiment of this application. Based on the embodiment shown in FIG. 16, referring to FIG. 17, the apparatus 10 for establishing a blockchain node connection further includes a sending module 13, where

the sending module 13 is configured to: before the receiving module 11 receives the first message from the first router, send a request message to the first router. The request message is used to request to obtain the address information of the node in the neighboring autonomous system of the first autonomous system.

Optionally, the sending module 13 may perform steps, in the foregoing method embodiments, that are related to sending actions of the first node. For example, the processing module 12 may perform S202 in the embodiment in FIG. 2, S404 and S407 in the embodiment in FIG. 4, S801, S802, S807, and S808 in the embodiment in FIG. 8, and S1201 and S1204 in the embodiment in FIG. 12.

In a possible implementation, address information of the first node includes at least one of an identifier of the first node, an IP address of the first node, a MAC address of the first node, or a blockchain account of the first node; and

the address information of the second node includes at least one of an identifier of the second node, an IP address of the second node, a MAC address of the second node, or a blockchain account of the second node.

In a possible implementation, before the processing module 12 establishes the connection to the second node based on the address information of the second node, the processing module 12 is further configured to add the address information of the second node to a neighbor table of the first node; and

the processing module 12 is specifically configured to establish the connection to the second node based on the address information in the neighbor table.

In a possible implementation, after the processing module 12 establishes the connection to the second node based on the address information of the second node, the processing module 12 is further configured to:

establish a connection to a third node, and obtain a first valid-node table from the third node;

obtain a second valid-node table from the second node; and

determine a target valid-node table from the first valid-node table and the second valid-node table, and perform node discovery based on the target valid-node table.

It should be noted that the apparatus 10 for establishing a blockchain node connection in this embodiment of this application can perform the technical solutions described in the foregoing method embodiments. An implementation principle and beneficial effects thereof are similar to those in the foregoing method embodiments. Details are not described herein again.

FIG. 18 is a schematic structural diagram of still another apparatus for establishing a blockchain node connection according to an embodiment of this application. The apparatus 20 for establishing a blockchain node connection may be applied to a first router in a blockchain system. The apparatus 20 for establishing a blockchain node connection may include:

a receiving module 21, configured to obtain address information of a second node, where the second node is located in a second autonomous system; and a sending module 22, configured to send the address information of the second node to the first node, where the first router and the first node are located in a first autonomous system, and the first autonomous system and the second autonomous system are neighboring autonomous systems.

Optionally, the receiving module 21 may perform steps, in the foregoing method embodiments, that are related to receiving actions of the first router. For example, the receiving module 21 may perform S201 in the embodiment in FIG. 2, S401, S404, and S407 in the embodiment in FIG. 4, S801, S802, S807, and S808 in the embodiment in FIG. 8, and S1201 and S1204 in the embodiment in FIG. 12.

Optionally, the sending module 22 may perform steps, in the foregoing method embodiments, that are related to sending actions of the first router. For example, the sending module 22 may perform S202 in the embodiment in FIG. 2, S405, S408, and S410 in the embodiment in FIG. 4, S803, S804, S806, and S809 in the embodiment in FIG. 8, and S1202, S1203, and S1206 in the embodiment in FIG. 12.

It should be noted that the apparatus 20 for establishing a blockchain node connection in this embodiment of this application can perform the technical solutions described in the foregoing method embodiments. An implementation principle and beneficial effects thereof are similar to those in the foregoing method embodiments. Details are not described herein again.

In a possible implementation, the sending module 22 is specifically configured to send a first message to the first node. The first message includes the address information of the second node. The first message is one of a border gateway protocol BGP message, a resource public key infrastructure to router RTR interface protocol message, or a self-defined interface message.

In a possible implementation, the receiving module 21 is further configured to: before the sending module sends the first message to the first node, receive a first request message sent by the first node. The first request message is used to request to obtain the address information of the node in the neighboring autonomous system of the first autonomous system.

In a possible implementation, the receiving module 21 is specifically configured to receive a first border gateway protocol BGP message from a second router. The first BGP message includes the address information of the second node, and the second router is located in the second autonomous system.

FIG. 19 is a schematic structural diagram of yet another apparatus for establishing a blockchain node connection according to an embodiment of this application. Based on the embodiment shown in FIG. 18, referring to FIG. 19, the apparatus 20 for establishing a blockchain node connection may further include a processing module 23, where

the processing module 23 is configured to: before the sending module 22 sends the address information to the first node, obtain an autonomous system path length of the address information, and determine that the autonomous system path length of the address information is 1, where the autonomous system path length is used to indicate a quantity of autonomous systems that the address information has passed through when the first router receives the address information.

In a possible implementation, the receiving module 21 is further configured to receive a second message sent by the first node. The second message includes address information of the first node. The second message is at least one of a BGP message, a resource public key infrastructure to router RTR interface protocol message, or a self-defined interface message.

In a possible implementation, address information of the first node includes at least one of an identifier of the first node, an IP address of the first node, a MAC address of the first node, or a blockchain account of the first node; and

the address information of the second node includes at least one of an identifier of the second node, an IP address of the second node, a MAC address of the second node, or a blockchain account of the second node.

It should be noted that the apparatus 20 for establishing a blockchain node connection in this embodiment of this application can perform the technical solutions described in the foregoing method embodiments. An implementation principle and beneficial effects thereof are similar to those in the foregoing method embodiments. Details are not described herein again.

It should be understood that in the apparatus for establishing a blockchain node connection, the processing module may be implemented by using a processor, the receiving module may be implemented by using a receiver, and the sending module may be implemented by using a transmitter.

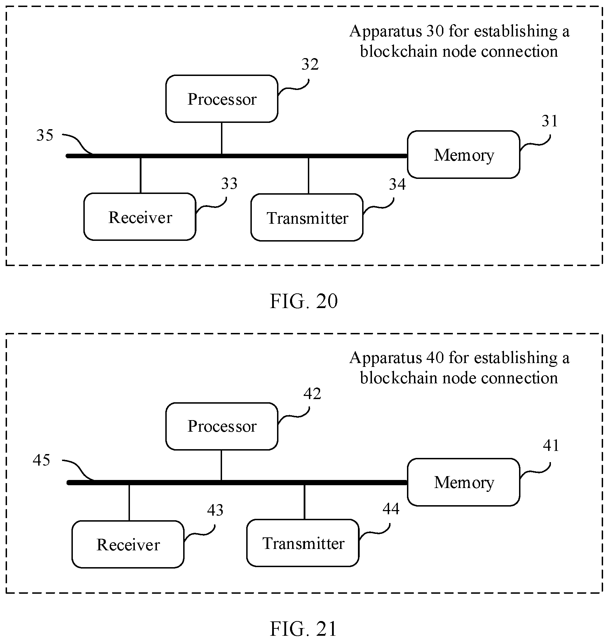

FIG. 20 is a schematic structural diagram of hardware of an apparatus for establishing a blockchain node connection according to this application. Referring to FIG. 20, the apparatus 30 for establishing a blockchain node connection includes a memory 31, a processor 32, a receiver 33, and a transmitter 34, where the memory 31 communicates with the processor 32. For example, the memory 31, the processor 32, the receiver 33, and the transmitter 34 may communicate with each other through a bus 35; the memory 31 is configured to store a computer program; and the processor 32 executes the computer program to implement the foregoing methods for establishing a blockchain node connection.

Optionally, the processor 32 in this application can implement functions of the processing module 12 in the embodiments in FIG. 16 and FIG. 17, the receiver 33 can implement functions of the receiving module 11 in the embodiments in FIG. 16 and FIG. 17, and the transmitter 34 can implement functions of the sending module 13 in the embodiments in FIG. 16 and FIG. 17. Details are not described herein again.

FIG. 21 is a schematic structural diagram of hardware of another apparatus for establishing a blockchain node connection according to this application. Referring to FIG. 21, the apparatus 40 for establishing a blockchain node connection includes a memory 41, a processor 42, a receiver 43, and a transmitter 44, where the memory 41 communicates with the processor 42. For example, the memory 41, the processor 42, the receiver 43, and the transmitter 44 may communicate with each other through a bus 45; the memory 41 is configured to store a computer program; and the processor 42 executes the computer program to implement the foregoing methods for establishing a blockchain node connection.

Optionally, the processor 42 in this application can implement functions of the processing module 23 in the embodiments in FIG. 18 and FIG. 19, the receiver 43 can implement functions of the receiving module 21 in the embodiments in FIG. 18 and FIG. 19, and the transmitter 44 can implement functions of the sending module 22 in the embodiments in FIG. 18 and FIG. 19. Details are not described herein again.

Optionally, the processor may be a central processing unit (Central Processing Unit, CPU), or may be another general purpose processor, a digital signal processor (Digital Signal Processor, DSP), an application-specific integrated circuit (Application Specific Integrated Circuit, ASIC), or the like. The general purpose processor may be a microprocessor, or the processor may be any conventional processor or the like. The steps in the embodiments corresponding to the methods for establishing a blockchain node connection disclosed with reference to this application may be directly performed by a hardware processor, or performed by a combination of hardware in a processor and a software module.

This application provides a storage medium. The storage medium is configured to store a computer program. The computer program is used to implement the methods for establishing a blockchain node connection in the foregoing embodiments.

All or some of the steps of the method embodiments may be implemented by a program instructing related hardware. The foregoing program may be stored in a computer-readable memory. When the program is executed, the steps of the method embodiments are performed. The memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the flowcharts.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the flowcharts.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the flowcharts.

Obviously, persons skilled in the art can make various modifications and variations to embodiments of this application.

In this application, the term "include" and variants thereof may mean non-restrictive inclusions, and the term "or" and variants thereof may mean "and/or". In this application, the terms "first", "second", and the like are intended to distinguish between similar objects but do not necessarily indicate a specific order or sequence. "A plurality of' in this application means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

**Claims**

1. A method for establishing a blockchain node connection, wherein the method is applied to a blockchain system, and the method comprises:

   obtaining (S202), by a first node, address information of a second node from a first router, wherein the first router and the first node are located in a first autonomous system, the second node is located in a second autonomous system, and the first autonomous system and the second autonomous system are neighboring autonomous systems; and
   establishing (S203), by the first node, a connection to the second node based on the address information of the second , wherein the first node and the second node are blockchain nodes,
   , **characterized by** further comprising: sending, by the first node, a first resource public key infrastructure to router, RTR, request message to the first router to request address information of a node in a neighboring autonomous system of a first autonomous system;
   wherein the obtaining, by a first node, address information of the second node from a first router comprises:
   receiving, by the first node, a first RTR content message from the first router, wherein the first RTR content message comprises the address information of the second node.

2. The method according to claim 1, wherein the RTR request message is an Account Query message; wherein the Account Query message occupies 64 bits, a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ bit are reserved bits, and a $32^{th}$ bit to a $63^{th}$ bit are used to indicate a length, wherein the PDU type indicates that the Account Query message is used to request to obtain address information; and
   wherein the RTR content message is an Account information message; wherein the Account information message occupies 64 bits, wherein a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ are reserved bits, a $32^{th}$ bit to a $63^{th}$ bit are used to indicate a length, and other information bits are used to indicate the address information, wherein the PDU type indicates that the Account information message is used to carry address information, wherein the address information of the second node is cached in the first router.

3. The method according to claim 1 or 2, wherein the address information of the second node comprises at least one of an identifier of the second node, an IP address of the second node, a MAC address of the second node, or a blockchain account of the second node.

4. The method according to any one of claims 1 to 3, wherein before the establishing, by the first node, a connection to the second node based on the address information of the second node, the method comprises:

   adding, by the first node, the address information of the second node to a neighbor table of the first node; and
   the establishing, by the first node, a connection to the second node based on the address information of the second node comprises:
   establishing, by the first node, the connection to the second node based on the address information in the neighbor table.

5. The method according to any one of claims 1 to 3, wherein after the establishing, by the first node, a connection to the second node based on the address information of the second node, the method further comprises:

   establishing, by the first node, a connection to a third node, and obtaining a first valid-node table from the third node;
obtaining, by the first node, a second valid-node table from the second node; and
determining, by the first node, a target valid-node table from the first valid-node table and the second valid-node table, and performing node discovery based on the target valid-node table.

6. A method for establishing a blockchain node connection, wherein the method is applied to a blockchain system, and the method comprises:

obtaining, by a first router, address information of a second node, wherein the second node is located in a second autonomous system; and
sending, by the first router, the address information of the second node to a first node, wherein the first router and the first node are located in a first autonomous system, and the first node and the second node are blockchain nodes;
the first autonomous system and the second autonomous system are neighboring autonomous systems and wherein the first node and the second node are blockchain nodes, **characterized by** further comprising: receiving, by the first router, a first resource public key infrastructure to router, RTR, request message sent by first node to request address information of a node in a neighboring autonomous system of a first autonomous system;
wherein the sending, by the first router, the address information of the second node to the first node comprises:
sending, by the first router, a first RTR content message to the first node, wherein the first RTR content message comprises the address information of the second node.

7. The method according to claim 6, wherein the RTR request message is an Account Query message; wherein the Account Query message occupies 64 bits, a 0th bit to a 7th bit are used to indicate a protocol version, an 8th bit to a 15th bit are used to indicate a PDU type, a 16th bit to a 31th bit are reserved bits, and a 32th bit to a 63th bit are used to indicate a length, wherein the PDU type indicates that the Account Query message is used to request to obtain address information; and
wherein the RTR content message is an Account information message; wherein the Account information message occupies 64 bits, wherein a 0th bit to a 7th bit are used to indicate a protocol version, an 8th bit to a 15th bit are used to indicate a PDU type, a 16th bit to a 31th are reserved bits, a 32th bit to a 63th bit are used to indicate a length, and other information bits are used to indicate the address information, wherein the PDU type indicates that the Account information message is used to carry address information, wherein the address information of the second node is cached in the first router.

8. The method according to claim 6 or 7, wherein the obtaining, by a first router, address information of a second node comprises:
receiving, by the first router, a first border gateway protocol BGP message from a second router, wherein the first BGP message comprises the address information of the second node, and the second router is located in the second autonomous system.

9. The method according to any one of claims 6 to 8, wherein before the sending, by the first router, the address information to the first node, the method further comprises:

obtaining, by the first router, an autonomous system path length of the address information, wherein the autonomous system path length is used to indicate a quantity of autonomous systems that the address information has passed through when the first router receives the address information; and
determining, by the first router, that the autonomous system path length of the address information is 1.

10. The method according to claim 8, wherein the method further comprises:
receiving, by the first router, a second message sent by the first node, wherein the second message comprises address information of the first node, and the second message is a resource public key infrastructure to router RTR interface protocol message.

11. The method according to any one of claims 6 to 10, wherein
the address information of the second node comprises at least one of an identifier of the second node, an IP address of the second node, a MAC address of the second node, or a blockchain account of the second node.

12. An apparatus (10) for establishing a blockchain node connection, wherein the apparatus is applied to a first node in a blockchain system, and the apparatus comprises:

a receiving module (11), configured to obtain address information of a second node from a first router, wherein the first router and the first node are located in a first autonomous system, the second node is located in a second autonomous system, and the first autonomous system and the second autonomous system are neighboring autonomous systems; and
a processing module (12), configured to establish a connection to the second node based on the address information of the second node; wherein the first node and the second node are blockchain nodes, **characterized in that** the apparatus is specifically configured to send a first resource public key infrastructure to router, RTR, request message to the first router to request address information of a node in a neighboring autonomous system of a first autonomous system; and the receiving (11) module is specifically configured to receive a first RTR content message from the first router, wherein the first RTR content message comprises the address information of the second node.

13. The apparatus according to claim 12, wherein the RTR request message is an Account Query message; wherein the Account Query message occupies 64 bits, a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ bit are reserved bits, and a $32^{th}$ bit to a $63^{th}$ bit are used to indicate a length, wherein the PDU type indicates that the Account Query message is used to request to obtain address information; and wherein the RTR content message is an Account information message; wherein the Account information message occupies 64 bits, wherein a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ are reserved bits, a $32^{th}$ bit to a $63^{th}$ bit are used to indicate a length, and other information bits are used to indicate the address information, wherein the PDU type indicates that the Account information message is used to carry address information, wherein the address information of the second node is cached in the first router.

14. An apparatus (20) for establishing a blockchain node connection, wherein the apparatus is applied to a first router in a blockchain system, and the apparatus comprises:

a receiving module (21), configured to obtain address information of a second node, wherein the second node is located in a second autonomous system; and
a sending module (22), configured to send the address information of the second node to a first node, wherein the first router and the first node are located in a first autonomous system, the first node and the second node are blockchain nodes, and
the first autonomous system and the second autonomous system are neighboring autonomous systems,
**characterized in that** the receiving module (21)

is specifically configured to receive a first resource public key infrastructure to router, RTR, request message from the first node to request address information of a node in a neighboring autonomous system of a first autonomous system;
; and the sending module (22) is specifically configured to send a first RTR content message to the first node, wherein the first RTR content message comprises the address information of the second node.

15. The apparatus according to claim 14, wherein the RTR request message is an Account Query message; wherein the Account Query message occupies 64 bits, a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ bit are reserved bits, and a $32^{th}$ bit to a $63^{th}$ bit are used to indicate a length, wherein the PDU type indicates that the Account Query message is used to request to obtain address information; and wherein the RTR content message is an Account information message; wherein the Account information message occupies 64 bits, wherein a $0^{th}$ bit to a $7^{th}$ bit are used to indicate a protocol version, an $8^{th}$ bit to a $15^{th}$ bit are used to indicate a PDU type, a $16^{th}$ bit to a $31^{th}$ are reserved bits, a $32^{th}$ bit to a $63^{th}$ bit are used to indicate a length, and other information bits are used to indicate the address information, wherein the address information of the second node is cached in the first router, wherein the PDU type indicates that the Account information message is used to carry address information.

**Patentansprüche**

1. Verfahren zum Herstellen einer Blockchain-Knotenverbindung, wobei das Verfahren auf ein Blockchain-System angewendet wird und das Verfahren Folgendes umfasst:

Erhalten (S202), durch einen ersten Knoten, von Adressinformationen eines zweiten Knotens von einem ersten Router, wobei sich der erste Router und der erste Knoten in einem ersten autonomen System befinden, sich der zweite Knoten in einem zweiten autonomen System befindet, und das erste autonome System und das zweite autonome System benachbarte autonome Systeme sind; und
Herstellen (S203), durch den ersten Knoten, einer Verbindung mit dem zweiten Knoten basierend auf den Adressinformationen des zweiten, wobei der erste Knoten und der zweite Knoten Blockchain-Knoten sind,
**gekennzeichnet durch** das fernere Umfassen von Folgendem: Senden, durch den ersten Knoten, einer ersten Anforderungsnachricht einer ersten Ressourcen-Public-Key-Infrastruktur an einen Router (resource public key infrastructure to router - RTR) an den erstem Router, um Adressinformationen eines Knotens in einem benachbarten autonomen System eines ersten autonomen Systems anzufordern; wobei das Erhalten, durch einen ersten Knoten, von Adressinformationen des zweiten Knotens von einem ersten Router Folgendes umfasst: Empfangen, durch den ersten Knoten, einer ersten RTR-Inhaltsnachricht von dem ersten Router, wobei die erste RTR-Inhaltsnachricht die Adressinformationen des zweiten Knotens umfasst.

2. Verfahren nach Anspruch 1, wobei die Anforderungsnachricht der RTR eine Kontoabfragenachricht ist; wobei die Kontoabfragenachricht 64 Bits belegt, ein $0^{-tes}$ Bit bis ein $7^{-tes}$ Bit verwendet werden, um eine Protokollversion anzuzeigen, ein $8^{-tes}$ Bit bis ein $15^{-tes}$ Bit verwendet werden, um einen PDU-Typ anzuzeigen, ein $16^{-tes}$ Bit bis ein $31^{-tes}$ Bit reservierte Bits sind und ein $32^{-tes}$ Bit bis ein $63^{-tes}$ Bit verwendet werden, um eine Länge anzuzeigen, wobei der PDU-Typ anzeigt, dass die Kontoabfragenachricht verwendet wird, um anzufordern, Adressinformationen zu erhalten; und wobei die RTR-Inhaltsnachricht eine Kontoinformationsnachricht ist; wobei die Kontoinformationsnachricht 64 Bits belegt, wobei ein $0^{-tes}$ Bit bis ein $7^{-tes}$ Bit verwendet werden, um eine Protokollversion anzuzeigen, ein $8^{-tes}$ Bit bis ein $15^{-tes}$ Bit verwendet werden, um einen PDU-Typ anzuzeigen, ein $16^{-tes}$ Bit bis ein $31^{-tes}$ reservierte Bits sind, ein $32^{-tes}$ Bit bis ein $63^{-tes}$ Bit verwendet werden, um eine Länge anzuzeigen, und andere Informationsbits verwendet werden, um Adressinformationen anzuzeigen, wobei der PDU-Typ anzeigt, dass die Kontoinformationsnachricht verwendet wird, um Adressinformationen zu tragen, wobei die Adressinformationen des zweiten Knotens in dem ersten Router gecached werden.

3. Verfahren nach Anspruch 1 oder 2, wobei die Adressinformationen des zweiten Knotens einen Identifizierer des zweiten Knotens, eine IP-Adresse des zweiten Knotens, eine MAC-Adresse des zweiten Knotens und/oder ein Blockchain-Konto des zweiten Knotens umfassen.

4. Verfahren nach einem der Ansprüche 1 bis 3, wobei, vor dem Herstellen, durch den ersten Knoten, einer Verbindung mit dem zweiten Knoten basierend auf den Adressinformationen des zweiten Knotens, das Verfahren Folgendes umfasst:

Hinzufügen, durch den ersten Knoten, der Adressinformationen des zweiten Knotens zu einer Nachbartabelle des ersten Knotens; und das Herstellen, durch den ersten Knoten, einer Verbindung mit dem zweiten Knoten basierend auf den Adressinformationen des zweiten Knotens Folgendes umfasst: Herstellen, durch den ersten Knoten, der Verbindung mit dem zweiten Knoten basierend auf den Adressinformationen in der Nachbartabelle.

5. Verfahren nach einem der Ansprüche 1 bis 3, wobei, nach dem Herstellen, durch den ersten Knoten, einer Verbindung mit dem zweiten Knoten basierend auf den Adressinformationen des zweiten Knotens, das Verfahren ferner Folgendes umfasst:

Herstellen, durch den ersten Knoten, einer Verbindung mit einem dritten Knoten und Erhalten einer ersten Tabelle gültiger Knoten von dem dritten Knoten; Erhalten, durch den ersten Knoten, einer zweiten Tabelle gültiger Knoten von dem zweiten Knoten; und Bestimmen, durch den ersten Knoten, einer Zieltabelle gültiger Knoten aus der ersten Tabelle gültiger Knoten und der zweiten Tabelle gültiger Knoten, und Durchführen einer Knotenerkennung basierend auf der Zieltabelle gültiger Knoten.

6. Verfahren zum Herstellen einer Blockchain-Knotenverbindung, wobei das Verfahren auf ein Blockchain-System angewendet wird und das Verfahren Folgendes umfasst:

Erhalten, durch einen ersten Router, von Adressinformationen eines zweiten Knotens, wobei sich der zweite Knoten in einem zweiten autonomen System befindet; und Senden, durch den ersten Router, der Adressinformationen des zweiten Knotens an einen ersten Knoten, wobei sich der erste Router und der erste Knoten in einem ersten autonomen System befinden und der erste Knoten und der zweite Knoten Blockchain-Knoten sind; das erste autonome System und das zweite autonome System benachbarte autonome Systeme sind und wobei der erste Knoten und der zweite Knoten Blockchain-Knoten sind, **gekennzeichnet durch** das fernere Umfassen von Folgendem: Empfangen, durch den ersten Router, einer Anforderungsnachricht der ersten Ressourcen-Public-Key-Infrastruktur an den Router (RTR), die durch den ersten Knoten gesendet wird, um Adressinformationen eines Knotens in einem benachbarten autonomen System eines ersten autonomen Systems anzufordern; wobei das Senden, durch den ersten Router, der Adressinformationen des zweiten Knotens an den ersten Knoten Folgendes umfasst:

Senden, durch den ersten Router, einer ersten RTR-Inhaltsnachricht an den ersten Knoten, wobei die erste RTR-Inhaltsnachricht die Adressinformationen des zweiten Knotens umfasst.

7. Verfahren nach Anspruch 6, wobei die Anforderungsnachricht der RTR eine Kontoabfragenachricht ist; wobei die Kontoabfragenachricht 64 Bits belegt, ein 0$^{-tes}$ Bit bis ein 7$^{-tes}$ Bit verwendet werden, um eine Protokollversion anzuzeigen, ein 8$^{-tes}$ Bit bis ein 15$^{-tes}$ Bit verwendet werden, um einen PDU-Typ anzuzeigen, ein 16$^{-tes}$ Bit bis ein 31$^{-tes}$ Bit reservierte Bits sind und ein 32$^{-tes}$ Bit bis ein 63$^{-tes}$ Bit verwendet werden, um eine Länge anzuzeigen, wobei der PDU-Typ anzeigt, dass die Kontoabfragenachricht verwendet wird, um anzufordern, Adressinformationen zu erhalten; und

wobei die RTR-Inhaltsnachricht eine Kontoinformationsnachricht ist; wobei die Kontoinformationsnachricht 64 Bits belegt, wobei ein 0$^{-tes}$ Bit bis ein 7$^{-tes}$ Bit verwendet werden, um eine Protokollversion anzuzeigen, ein 8$^{-tes}$ Bit bis ein 15$^{-tes}$ Bit verwendet werden, um einen PDU-Typ anzuzeigen, ein 16$^{-tes}$ Bit bis ein 31$^{-tes}$ reservierte Bits sind, ein 32$^{-tes}$ Bit bis ein 63$^{-tes}$ Bit verwendet werden, um eine Länge anzuzeigen, und andere Informationsbits verwendet werden, um die Adressinformationen anzuzeigen, wobei der PDU-Typ anzeigt, dass die Kontoinformationsnachricht verwendet wird, um Adressinformationen zu tragen, wobei die Adressinformationen des zweiten Knotens in dem ersten Router gecached werden.

8. Verfahren nach Anspruch 6 oder 7, wobei das Erhalten, durch einen ersten Router, von Adressinformationen eines zweiten Knotens Folgendes umfasst:

Empfangen, durch einen ersten Router, einer ersten Border-Gateway-Protocol(BGP)-Nachricht von einem zweiten Router, wobei die erste BGP-Nachricht die Adressinformationen des zweiten Knotens umfasst und sich der zweite Router in dem zweiten autonomen System befindet.

9. Verfahren nach einem der Ansprüche 6 bis 8, wobei, vor dem Senden, durch den ersten Router, der Adressinformationen an den ersten Knoten, das Verfahren ferner Folgendes umfasst:

Erhalten, durch den ersten Router, einer Pfadlänge des autonomen Systems der Adressinformationen, wobei die Pfadlänge des autonomen Systems verwendet wird, um eine Anzahl von autonomen Systemen anzuzeigen, die die Adressinformationen durchlaufen haben, wenn der erste Router die Adressinformationen empfängt; und

Bestimmen, durch den ersten Router, dass die Pfadlänge des autonomen Systems der Adressinformationen 1 beträgt.

10. Verfahren nach Anspruch 8, wobei das Verfahren ferner Folgendes umfasst:

Empfangen, durch den ersten Router, einer zweiten Nachricht, die durch den ersten Knoten gesendet wird, wobei die zweite Nachricht Adressinformationen des ersten Knotens umfasst und die zweite Nachricht eine Schnittstellenprotokollnachricht der Ressourcen-Public-Key-Infrastruktur an den Router (RTR) ist.

11. Verfahren nach einem der Ansprüche 6 bis 10, wobei die Adressinformationen des zweiten Knotens einen Identifizierer des zweiten Knotens, eine IP-Adresse des zweiten Knotens, eine MAC-Adresse des zweiten Knotens und/oder ein Blockchain-Konto des zweiten Knotens umfassen.

12. Einrichtung (10) zum Herstellen einer Blockchain-Knotenverbindung, wobei die Einrichtung auf einen ersten Knoten in einem Blockchain-System angewendet wird und die Einrichtung Folgendes umfasst:

ein Empfangsmodul (11), das konfiguriert ist, um Adressinformationen eines zweiten Knotens von einem ersten Router zu erhalten, wobei sich der erste Router und der erste Knoten in einem ersten autonomen System befinden, sich der zweite Knoten in einem zweiten autonomen System befindet und das erste autonome System und das zweite autonome System benachbarte autonome Systeme sind; und

ein Verarbeitungsmodul (12), das konfiguriert ist, um eine Verbindung mit dem zweiten Knoten basierend auf den Adressinformationen des zweiten Knotens herzustellen;

wobei der erste Knoten und der zweite Knoten Blockchain-Knoten sind, **dadurch gekennzeichnet, dass**

die Einrichtung speziell konfiguriert ist, um eine Anforderungsnachricht der ersten Ressourcen-Public-Key-Infrastruktur an den Router (RTR) an den ersten Router zu senden, um Adressinformationen eines Knotens in einem benachbarten autonomen System eines ersten autonomen Systems anzufordern; und das Empfangs(11)-Modul speziell konfiguriert ist, um eine erste RTR-Inhaltsnachricht von dem ersten Router zu empfangen, wobei die erste RTR-Inhaltsnachricht die Adressinformationen des zweiten Knotens umfasst.

**13.** Einrichtung nach Anspruch 12, wobei die Anforderungsnachricht der RTR eine Kontoabfragenachricht ist; wobei die Kontoabfragenachricht 64 Bits belegt, ein 0-tes Bit bis ein 7-tes Bit verwendet werden, um eine Protokollversion anzuzeigen, ein 8-tes Bit bis ein 15-tes Bit verwendet werden, um einen PDU-Typ anzuzeigen, ein 16-tes Bit bis ein 31-tes Bit reservierte Bits sind und ein 32-tes Bit bis ein 63-tes Bit verwendet werden, um eine Länge anzuzeigen, wobei der PDU-Typ anzeigt, dass die Kontoabfragenachricht verwendet wird, um anzufordern, Adressinformationen zu erhalten; und

wobei die RTR-Inhaltsnachricht eine Kontoinformationsnachricht ist; wobei die Kontoinformationsnachricht 64 Bits belegt, wobei ein 0-tes Bit bis ein 7-tes Bit verwendet werden, um eine Protokollversion anzuzeigen, ein 8-tes Bit bis ein 15-tes Bit verwendet werden, um einen PDU-Typ anzuzeigen, ein 16-tes Bit bis ein 31-tes reservierte Bits sind, ein 32-tes Bit bis ein 63-tes Bit verwendet werden, um eine Länge anzuzeigen, und andere Informationsbits verwendet werden, um die Adressinformationen anzuzeigen, wobei der PDU-Typ anzeigt, dass die Kontoinformationsnachricht verwendet wird, um Adressinformationen zu tragen, wobei die Adressinformationen des zweiten Knotens in dem ersten Router gecached werden.

**14.** Einrichtung (20) zum Herstellen einer Blockchain-Knotenverbindung, wobei die Einrichtung auf einen ersten Router in einem Blockchain-System angewendet wird und die Einrichtung Folgendes umfasst:

ein Empfangsmodul (21), das konfiguriert ist, um Adressinformationen eines zweiten Knotens zu erhalten, wobei sich der zweite Knoten in einem zweiten autonomen System befindet; und ein Sendemodul (22), das konfiguriert ist, um die Adressinformationen des zweiten Knotens an einen ersten Knoten zu senden, wobei sich der erste Router und der erste Knoten in einem ersten autonomen System befinden, wobei der erste Knoten und der zweite Knoten Blockchain-Knoten sind, und

das erste autonome System und das zweite autonome System benachbarte autonome Systeme sind,

**dadurch gekennzeichnet, dass** das Empfangsmodul (21) speziell konfiguriert ist, um eine Anforderungsnachricht der ersten Ressourcen-Public-Key-Infrastruktur an den Router (RTR) von dem ersten Knoten zu empfangen, um Adressinformationen eines Knotens in einem benachbarten autonomen System eines ersten autonomen Systems anzufordern; und das Sendemodul (22) speziell konfiguriert ist, um eine erste RTR-Inhaltsnachricht an den ersten Knoten zu senden, wobei die erste RTR-Inhaltsnachricht die Adressinformationen des zweiten Knotens umfasst.

**15.** Einrichtung nach Anspruch 14, wobei die Anforderungsnachricht der RTR eine Kontoabfragenachricht ist; wobei die Kontoabfragenachricht 64 Bits belegt, ein 0-tes Bit bis ein 7-tes Bit verwendet werden, um eine Protokollversion anzuzeigen, ein 8-tes Bit bis ein 15-tes Bit verwendet werden, um einen PDU-Typ anzuzeigen, ein 16-tes Bit bis ein 31-tes Bit reservierte Bits sind und ein 32-tes Bit bis ein 63-tes Bit verwendet werden, um eine Länge anzuzeigen, wobei der PDU-Typ anzeigt, dass die Kontoabfragenachricht verwendet wird, um anzufordern, Adressinformationen zu erhalten; und

wobei die RTR-Inhaltsnachricht eine Kontoinformationsnachricht ist; wobei die Kontoabfragenachricht 64 Bits belegt, wobei ein 0-tes Bit bis ein 7-tes Bit verwendet werden, um eine Protokollversion anzuzeigen, ein 8-tes Bit bis ein 15-tes Bit verwendet werden, um einen PDU-Typ anzuzeigen, ein 16-tes Bit bis ein 31-tes reservierte Bits sind, ein 32-tes Bit bis ein 63-tes Bit verwendet werden, um eine Länge anzuzeigen, und andere Informationsbits verwendet werden, um die Adressinformationen anzuzeigen, wobei die Adressinformationen des zweiten Knotens in dem ersten Router gecached werden, wobei der PDU-Typ anzeigt, dass die Kontoinformationsnachricht verwendet wird, um Adressinformationen zu tragen.

## Revendications

**1.** Procédé permettant d'établir une connexion de noeuds de chaîne de blocs, dans lequel le procédé est appliqué à un système de chaîne de blocs, et le procédé comprend :

l'obtention (S202), par un premier noeud, d'informations d'adresse d'un deuxième noeud en provenance d'un premier routeur, le premier routeur et le premier noeud étant situés dans un premier système autonome, le deuxième noeud étant situé dans un second système autonome, et le premier système autonome et le second système autonome étant des systèmes autonomes voisins ; et l'établissement (S203), par le premier noeud, d'une connexion au deuxième noeud sur la base des informations d'adresse du deuxième, le premier noeud et le deuxième noeud étant des noeuds de chaîne de blocs,

**caractérisé en ce qu'**il comprend en outre : l'envoi, par le premier noeud, d'un premier message de demande d'infrastructure à clé publique de ressources au routeur, RTR, au premier routeur pour demander des informations d'adresse d'un noeud dans un système autonome voisin d'un premier système autonome ;

l'obtention, par un premier noeud, d'informations d'adresse du deuxième noeud en provenance d'un premier routeur comprenant :

la réception, par le premier noeud, d'un premier message de contenu RTR en provenance du premier routeur, le premier message de contenu RTR comprenant les informations d'adresse du deuxième noeud.

2. Procédé selon la revendication 1, dans lequel le message de demande RTR est un message de requête de compte ; le message de requête de compte occupant 64 bits, un $0^{ème}$ bit à un $7^{ème}$ bit étant utilisés pour indiquer une version de protocole, un $8^{ème}$ bit à un $15^{ème}$ bit étant utilisés pour indiquer un type de PDU, un $16^{ème}$ bit à un $31^{ème}$ bit étant des bits réservés, et un $32^{ème}$ bit à un $63^{ème}$ bit étant utilisés pour indiquer une longueur, le type de PDU indiquant que le message de requête de compte est utilisé pour demander l'obtention d'informations d'adresse ; et

le message de contenu RTR étant un message d'informations de compte ; le message d'informations de compte occupant 64 bits, un $0^{ème}$ bit à un $7^{ème}$ bit étant utilisés pour indiquer une version de protocole, un $8^{ème}$ bit à un $15^{ème}$ bit étant utilisés pour indiquer un type de PDU, un $16^{ème}$ bit à un $31^{ème}$ bit étant des bits réservés, un $32^{ème}$ bit à un $63^{ème}$ bit étant utilisés pour indiquer une longueur, et d'autres bits d'informations étant utilisés pour indiquer les informations d'adresse, le type de PDU indiquant que le message d'informations de compte est utilisé pour transporter des informations d'adresse, les informations d'adresse du deuxième noeud étant mises en cache dans le premier routeur.

3. Procédé selon la revendication 1 ou 2, dans lequel les informations d'adresse du deuxième noeud comprennent un identifiant du deuxième noeud, et/ou une adresse IP du deuxième noeud, et/ou une adresse MAC du deuxième noeud et/ou un compte de chaîne de blocs du deuxième noeud.

4. Procédé selon l'une quelconque des revendications 1 à 3, dans lequel, avant l'établissement, par le premier noeud, d'une connexion au deuxième noeud sur la base des informations d'adresse du deuxième noeud, le procédé comprend :

l'ajout, par le premier noeud, des informations d'adresse du deuxième noeud à une table de voisinage du premier noeud ; et

l'établissement, par le premier noeud, d'une connexion au deuxième noeud sur la base des informations d'adresse du deuxième noeud comprend :

l'établissement, par le premier noeud, de la connexion au deuxième noeud sur la base des informations d'adresse dans la table de voisinage.

5. Procédé selon l'une quelconque des revendications 1 à 3, dans lequel, après l'établissement, par le premier noeud, d'une connexion au deuxième noeud sur la base des informations d'adresse du deuxième noeud, le procédé comprend en outre :

l'établissement, par le premier noeud, d'une connexion à un troisième noeud, et l'obtention d'une première table de noeuds valides à partir du troisième noeud ;

l'obtention, par le premier noeud, d'une seconde table de noeuds valides à partir du deuxième noeud ; et

la détermination, par le premier noeud, d'une table de noeuds valides cible à partir de la première table de noeuds valides et de la seconde table de noeuds valides, et la réalisation d'une découverte de noeuds sur la base de la table de noeuds valides cible.

6. Procédé permettant d'établir une connexion de noeuds de chaîne de blocs, dans lequel le procédé est appliqué à un système de chaîne de blocs, et le procédé comprend :

l'obtention, par un premier routeur, d'informations d'adresse d'un deuxième noeud, le deuxième noeud étant situé dans un second système autonome ; et

l'envoi, par le premier routeur, des informations d'adresse du deuxième noeud à un premier noeud, le premier routeur et le premier noeud étant situés dans un premier système autonome, et le premier noeud et le deuxième noeud étant des noeuds de chaîne de blocs ;

le premier système autonome et le second système autonome étant des systèmes autonomes voisins et le premier noeud et le deuxième noeud étant des noeuds de chaîne de blocs, **caractérisé en ce qu'**il comprend en outre : la réception, par le premier routeur, d'un premier message de demande d'infrastructure à clé publique de ressources au routeur, RTR, envoyé par le premier noeud pour demander des informations d'adresse d'un noeud dans un système autonome voisin d'un premier système autonome ; l'envoi, par le premier routeur, des informations d'adresse du deuxième noeud au premier noeud comprenant :

l'envoi, par le premier routeur, d'un premier message de contenu RTR au premier noeud, le premier message de contenu RTR comprenant les informations d'adresse du deuxième noeud.

7. Procédé selon la revendication 6, dans lequel le message de demande RTR est un message de requête de compte ; le message de requête de compte occupant 64 bits, un 0ème bit à un 7ème bit étant utilisés pour indiquer une version de protocole, un 8ème bit à un 15ème bit étant utilisés pour indiquer un type de PDU, un 16ème bit à un 31ème bit étant des bits réservés, et un 32ème bit à un 63ème bit étant utilisés pour indiquer une longueur, le type de PDU indiquant que le message de requête de compte est utilisé pour demander l'obtention d'informations d'adresse ; et

le message de contenu RTR étant un message d'informations de compte ; le message d'informations de compte occupant 64 bits, un 0ème bit à un 7ème bit étant utilisés pour indiquer une version de protocole, un 8ème bit à un 15ème bit étant utilisés pour indiquer un type de PDU, un 16ème bit à un 31ème bit étant des bits réservés, un 32ème bit à un 63ème bit étant utilisés pour indiquer une longueur, et d'autres bits d'informations étant utilisés pour indiquer les informations d'adresse, le type de PDU indiquant que le message d'informations de compte est utilisé pour transporter des informations d'adresse, les informations d'adresse du deuxième noeud étant mises en cache dans le premier routeur.

**8.** Procédé selon la revendication 6 ou 7, dans lequel l'obtention, par un premier routeur, d'informations d'adresse d'un deuxième noeud comprend :
la réception, par le premier routeur, d'un premier message de protocole de passerelle frontière BGP en provenance d'un second routeur, le premier message BGP comprenant les informations d'adresse du deuxième noeud, et le second routeur étant situé dans le second système autonome.

**9.** Procédé selon l'une quelconque des revendications 6 à 8, dans lequel, avant l'envoi, par le premier routeur, des informations d'adresse au premier noeud, le procédé comprend en outre :

l'obtention, par le premier routeur, d'une longueur de chemin de système autonome des informations d'adresse, la longueur de chemin de système autonome étant utilisée pour indiquer une quantité de systèmes autonomes par lesquels les informations d'adresse sont passées lorsque le premier routeur reçoit les informations d'adresse ; et
la détermination, par le premier routeur, selon laquelle la longueur de chemin de système autonome des informations d'adresse est de 1.

**10.** Procédé selon la revendication 8, dans lequel le procédé comprend en outre :
la réception, par le premier routeur, d'un second message envoyé par le premier noeud, le second message comprenant des informations d'adresse du premier noeud, et le second message étant un message de protocole d'interface d'infrastructure à clé publique de ressources au routeur RTR.

**11.** Procédé selon l'une quelconque des revendications 6 à 10, dans lequel
les informations d'adresse du deuxième noeud comprennent un identifiant du deuxième noeud, et/ou une adresse IP du deuxième noeud, et/ou une adresse MAC du deuxième noeud et/ou un compte de chaîne de blocs du deuxième noeud.

**12.** Appareil (10) permettant d'établir une connexion de noeuds de chaîne de blocs, dans lequel l'appareil est appliqué à un premier noeud dans un système de chaîne de blocs, et l'appareil comprend :

un module de réception (11), configuré pour obtenir des informations d'adresse d'un deuxième noeud en provenance d'un premier routeur, le premier routeur et le premier noeud étant situés dans un premier système autonome, le deuxième noeud étant situé dans un second système autonome, et le premier système autonome et le second système autonome étant des systèmes autonomes voisins ; et
un module de traitement (12), configuré pour établir une connexion au deuxième nœud sur la base des informations d'adresse du deuxième nœud ;
le premier nœud et le deuxième nœud étant des nœuds de chaîne de blocs, **caractérisé en ce que**
l'appareil est spécifiquement configuré pour envoyer un premier message de demande d'infrastructure à clé publique de ressources au routeur, RTR, au premier routeur pour demander des informations d'adresse d'un nœud dans un système autonome voisin d'un premier système autonome ; et le module de réception (11) est spécifiquement configuré pour recevoir un premier message de contenu RTR en provenance du premier routeur, le premier message de contenu RTR comprenant les informations d'adresse du deuxième nœud.

**13.** Appareil selon la revendication 12, dans lequel le message de demande RTR est un message de requête de compte ; le message de requête de compte occupant 64 bits, un 0ème bit à un 7ème bit étant utilisés pour indiquer une version de protocole, un 8ème bit à un 15ème bit étant utilisés pour indiquer un type de PDU, un 16ème bit à un 31ème bit étant des bits réservés, et un 32ème bit à un 63ème bit étant utilisés pour indiquer une longueur, le type de PDU indiquant que le message de requête de compte est utilisé pour demander l'obtention d'informations d'adresse ; et

le message de contenu RTR étant un message d'informations de compte ; le message d'informations de compte occupant 64 bits, un $0^{ème}$ bit à un $7^{ème}$ bit étant utilisés pour indiquer une version de protocole, un $8^{ème}$ bit à un $15^{ème}$ bit étant utilisés pour indiquer un type de PDU, un $16^{ème}$ bit à un $31^{ème}$ bit étant des bits réservés, un $32^{ème}$ bit à un $63^{ème}$ bit étant utilisés pour indiquer une longueur, et d'autres bits d'informations étant utilisés pour indiquer les informations d'adresse, le type de PDU indiquant que le message d'informations de compte est utilisé pour transporter des informations d'adresse, les informations d'adresse du deuxième nœud étant mises en cache dans le premier routeur.

14. Appareil (20) permettant d'établir une connexion de nœuds de chaîne de blocs, dans lequel l'appareil est appliqué à un premier routeur dans un système de chaîne de blocs, et l'appareil comprend :

   un module de réception (21), configuré pour obtenir des informations d'adresse d'un deuxième nœud, le deuxième nœud étant situé dans un second système autonome ; et
   un module d'envoi (22), configuré pour envoyer les informations d'adresse du deuxième nœud à un premier nœud, le premier routeur et le premier nœud étant situés dans un premier système autonome, le premier nœud et le deuxième nœud étant des nœuds de chaîne de blocs, et le premier système autonome et le second système autonome étant des systèmes autonomes voisins,
   **caractérisé en ce que** le module de réception (21) est spécifiquement configuré pour recevoir un premier message de demande d'infrastructure à clé publique de ressources au routeur, RTR, en provenance du premier nœud pour demander des informations d'adresse d'un nœud dans un système autonome voisin d'un premier système autonome ;
   et le module d'envoi (22) est spécifiquement configuré pour envoyer un premier message de contenu RTR au premier nœud, le premier message de contenu RTR comprenant les informations d'adresse du deuxième nœud.

15. Appareil selon la revendication 14, dans lequel le message de demande RTR est un message de requête de compte ; le message de requête de compte occupant 64 bits, un $0^{ème}$ bit à un $7^{ème}$ bit étant utilisés pour indiquer une version de protocole, un $8^{ème}$ bit à un $15^{ème}$ bit étant utilisés pour indiquer un type de PDU, un $16^{ème}$ bit à un $31^{ème}$ bit étant des bits réservés, et un $32^{ème}$ bit à un $63^{ème}$ bit étant utilisés pour indiquer une longueur, le type de PDU indiquant que le message de requête de compte est utilisé pour demander l'obtention d'informations d'adresse ; et

le message de contenu RTR étant un message d'informations de compte ; le message d'informations de compte occupant 64 bits, un $0^{ème}$ bit à un $7^{ème}$ bit étant utilisés pour indiquer une version de protocole, un $8^{ème}$ bit à un $15^{ème}$ bit étant utilisés pour indiquer un type de PDU, un $16^{ème}$ bit à un $31^{ème}$ bit étant des bits réservés, un $32^{ème}$ bit à un $63^{ème}$ bit étant utilisés pour indiquer une longueur, et d'autres bits d'informations étant utilisés pour indiquer les informations d'adresse, les informations d'adresse du deuxième nœud étant mises en cache dans le premier routeur, le type de PDU indiquant que le message d'informations de compte est utilisé pour transporter des informations d'adresse.

AS2

N2

G21

G23

AS1

G11

G12

G22

AS4

N1

G41

N4

G13

AS3

G42

G31

G32

N3

FIG. 1

---

| First router |

| First node |

S201. Obtain address information
of a second node

S202. Send the address information
of the second node to the first node

S203. Establish a connection to the
second node based on the address
information of the second node

FIG. 2

BGP update message

AS path

Origin

MP_REACH_NLRI/

MP_UNREACH_NLRI

AFI: AsInfo

SAFI: AsInfo

Length of a next hop

Reserved bit

ASINFO_NLRI

ASINFO_NLRI

Type: DII_BC_ACCOUNTINFO

Length

DII_BC_ACCOUNTINFO

Address information

FIG. 3

| Second router | First router | First node |
|---|---|---|

S401. First BGP update
message
(including address
information of a second node) →

S402. Cache the address
information of the second node

S403. Start

S404. First BGP
open message ←

S405. Second BGP
open message →

S406. Establish an
IBGP connection ←

S407. Second BGP
update message
(address information of
the first node) ←

S408. Third BGP
update message
(the address information
of the second node) →

S409. Establish a connection
to the second node based on
the address information of the
second node

S410. Fourth BGP update
message
(including the address
information of the first node) ←

S411. Cache the address
information of the first node

FIG. 4

31

EP 3 783 868 B1

AS1

N1

G12

G11

AS2

N2

G21 G22 G23

BGP update
message

AS path: AS1

AS3

N3

G31 G32

BGP update
message

AS path: AS2, AS1

FIG. 5

BGP open message

Capability

AFI: AsInfo

Reserved bit

SAFI: AsInfo

FIG. 6

AS1

Node 1

| | | Neighbor table |
|---|---|---|
| Ethereum wire protocol | | |
| DEVp2p wire protocol | RLPx node discovery | Node discovery |
| TCP | UDP | BGP/TCP |

1. After the node 1 is started, establish an IBGP connection

2. Cached address information of the node in the neighboring AS

3. Address information of the node 1

Router 1

4. Address information of the node 1

TO
FIG. 7B

FIG. 7A

EP 3 783 868 B1

AS2

Node 2

Neighbor table

| Ethereum wire protocol | | |
|---|---|---|
| DEVp2p wire protocol | RLPx Node discovery | Node discovery |
| TCP | UDP | BGP/TCP |

6. Address information of the node 1

7. Add the node 1 to the neighbor table

Router 2

5. Cache the address information of the node 1

FIG. 7B

| First node | First router | Second router |
|---|---|---|

S801. Send a notification message after being started

S802. First RTR request message

S803. First RTR response message

S804. First RTR content message (including address information of a second node)

S805. Establish a connection to the second node based on the address information of the second node

S806. Second RTR request message

S807. Second RTR response message

S808. Second RTR content message (including address information of the first node)

S809. BGP update message (including the address information of the first node

S810. Cache the address information of the first node

FIG. 8

FIG. 9

FIG. 10

FIG. 11

| First node | First router | | Second router |
|---|---|---|---|

S1201. First information notification message (including address information of the first node)

S1202. First information response message

S1203. Second information notification message (including address information of a second node)

S1204. Second information response message

S1205. Establish a connection to the second node based on the address information of the second node

S1206. BGP update message (including the address information of the first node)

S1207. Cache the address information of the first node

FIG. 12

| First router | | First node |
|---|---|---|

S1301. Start

S1302. Address information, cached
in the first router, of a node in a
neighboring AS of a first AS

S1303. Update a neighbor table based on the
received address information of the node in
the neighboring AS of the first AS

S1304. Establish a connection to the node in
the neighboring AS of the first AS based on
the address information in an updated
neighbor table

S1305. Perform node discovery based on node
information in a node table, and establish a
connection to a discovered node

FIG. 13

FIG. 14

| First node | Third node | Second node |
|---|---|---|

S1501. Start

S1502. Establish a connection

S1503. First valid-node table

S1504. Establish a connection

S1505. Second valid-node table

S1506. Determine a target valid-node table from the first valid-node table and the second valid-node table

S1507. Perform node discovery based on the target valid-node table

FIG. 15

Apparatus 10 for establishing a blockchain node connection

Receiving module    11

Processing module    12

FIG. 16

Apparatus 10 for establishing a
blockchain node connection

11

Receiving module

12

Processing module

13

Sending module

FIG. 17

Apparatus 20 for establishing a
blockchain node connection

21

Receiving module

22

Sending module

FIG. 18

Apparatus 20 for establishing a
blockchain node connection

21

Receiving module

22

Sending module

23

Processing module

FIG. 19

Apparatus 30 for establishing a
blockchain node connection

32

Processor

35

Memory

31

33

34

Receiver

Transmitter

FIG. 20

Apparatus 40 for establishing a
blockchain node connection

42

Processor

45

Memory

41

43

44

Receiver

Transmitter

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **APOSTOLAKI, MARIA et al.** SABRE: Protecting Bitcoin against Routing Attacks. *Network and Distributed Systems Security (NDSS) Symposium 2019,* 24 February 2019

- ISP-friendly peer selection mechanism with alto-like server. **MEGUMI, S et al.** 13th Asia-Pacific Network Operations and Management Symposium. IEEE, 21 September 2011, 1-8